# EUROPÄISCHE PATENTSCHRIFT

(11) **EP 3 772 992 B1**
(45) Veröffentlichungstag und Bekanntmachung des Hinweises auf die Patenterteilung: **18.05.2022**
(21) Anmeldenummer: 19718288.4
(22) Anmeldetag: 10.04.2019
(51) Int. Cl.: A23L 3/10, A23L 3/36, A23B 4/28, A23L 3/12

(54) **VERFAHREN ZUR KONSERVIERUNG EINER WARMZUBEREITETEN SPEISE UND ZUM BEREITSTELLEN VON GEMEINSCHAFTSVERPFLEGUNG**
METHOD FOR CONSERVING A MEAL PREPARED BY HEATING, AND FOR PROVIDING COMMUNAL CATERING
PROCÉDÉ DE CONSERVATION D'UN PLAT À PRÉPARER CHAUD ET DE PRÉPARATION D'ALIMENTS POUR COLLECTIVITÉ

(30) Priorität: 10.04.2018 DE 102018108437
(43) Veröffentlichungstag der Anmeldung: 17.02.2021
(73) Patentinhaber: Freshfoodz GmbH, 13507 Berlin (DE)
(72) Erfinder: STREECK, Karsten, 10115 Berlin (DE); STREECK, Jörg, 10115 Berlin (DE); BLUM, Jan Andre, 10115 Berlin (DE)
(74) Vertreter: Hertin und Partner Rechts- und Patentanwälte PartG mbB
(86) Internationale Anmeldenummer: PCT/EP2019/059079
(87) Internationale Veröffentlichungsnummer: WO 2019/197463

(56) Entgegenhaltungen:
- EP-A1- 1 344 461
- DE-C- 317 520
- US-A1- 2008 216 489
- US-A1- 2014 193 554
- Anonymous: "HYFRA Sigma: Efficient, reliable cooling water recooling systems", , 1. September 2017 (2017-09-01), Seiten 1-12, XP055591608, Gefunden im Internet: URL:https://www.hyfra.com/fileadmin/Dateie n/PRODUKTE/HYFRA_Sigma/HYFRA-Sigma-Brochur e_EN.pdf [gefunden am 2019-05-24]

## Beschreibung

Die Erfindung betrifft ein Verfahren zur Bereitstellung und Konservierung von Gemeinschaftsessen, wobei eine Vielzahl von Lebensmittelspeisen bzw. Speisekomponenten nach deren warmer Zubereitung bei einer Temperatur von mindestens 75°C in Verpackungseinheiten abgefüllt und versiegelt werden. Zur Kühlung der versiegelten Verpackungseinheiten wird ein Wasserbad mit einer Temperatur von weniger als 3°C genutzt, um die Speisekomponente innerhalb von höchstens 90 min von einer Kerntemperatur von 65°C oder mehr auf eine Kerntemperatur von 3°C oder weniger zu führen. In bevorzugten Ausführungsformen betrifft die Erfindung zudem Verfahren zur Regeneration der gekühlten Verpackungseinheiten für den Verzehr in einem Wasserbad mit einer Temperatur von 80°-90°C.

### Hintergrund und Stand der Technik

Im Stand der Technik ist das Cook & Chill Verfahren bekannt, mit welchem auf die unmittelbare Ausgabe von Speisen in der Gemeinschaftsverpflegung verzichtet werden kann. Dieses Verfahren grenzt sich zu älteren Verfahren der Warmverpflegung ab, bei welchen die Speisen nach der Zubereitung unmittelbar an den Endverbraucher weitergegeben oder bis zum eigentlichen Verzehr warm gehalten werden. Diese Verfahren werden auch als Cook & Serve (Kochen und Servieren) oder Cook & Hold (Kochen und Halten) bezeichnet.

Im Gegensatz zu Cook & Serve bzw. Cook & Hold zeichnet sich Cook & Chill durch eine zeitliche Entkopplung der Produktion von der Speisenausgabe und somit flexiblere Gestaltung der Zubereitung, ohne Zeitdruck der Fertigstellung zur Ausgabezeit aus. Auch ermöglicht die zwischenzeitliche Haltbarmachung eine betriebswirtschaftliche Optimierung hinsichtlich der Gestaltung des Einkaufs, einer ggf. zentralen Zubereitung in einer Großküche sowie der bedarfsorientierte Zulieferung an dezentrale Endverbraucher.

Bei den bekannten Verfahren des Cook & Chill werden zunächst Komponenten der Warmverpflegung auf herkömmliche Weise zubereitet und portioniert, um sie dann innerhalb von 90 Minuten auf eine Temperatur im Bereich von 4 oder 3 Grad Celsius zu führen. Dieses Verfahren wird als Schnellkühlung bezeichnet, welches mit gekühlter Luft vorgenommen wird. Die gekühlte Gemeinschaftsverpflegung kann bei ununterbrochener Kühlkette bis zu vier Tagen gelagert werden. Unmittelbar vor der Ausgabe wird sie wieder auf Verzehrtemperatur erwärmt.

Hierzu ist es im Stand der Technik bekannt die Menükomponenten in Gastronomiebehälter oder Bain-Marie-Behältern mittels Heißluft-Systemen zu regenerieren. Die heiße Luft wird zu diesem Zweck mit Temperaturen von 100°C, 150°C oder mehr unmittelbar auf die Lebensmittel geblasen.

Ein Vorteil dieses Vorgehens ist es, dass die mikrobiologische Belastung der Speisen hierdurch minimiert werden kann. Ein Nachteil ist jedoch, dass vor allem durch die Luftkühlung und die Erwärmung der Speisen durch Warmluft eine deutlich wahrnehmbare Qualitätsminderung eintritt. Diese zeigt sich sowohl in einer Veränderung der Konsistenz der Lebensmittel als auch einem Geschmacksverslust.

Da die Nahrungsaufnahme in Deutschland wieder eine größere Bedeutung, beispielsweise im familiären Rahmen gewonnen hat, entsteht durch das Cook & Chill Verfahren gemäß des Standes der Technik ein großer Unterschied zwischen den Speisen, die beispielsweise Kinder in der Schulkantine vorfinden und solchen, die sie zu Hause verzehren. Während im familiären Umfeld häufig auf hochwertige und gut schmeckende Produkte geachtet wird, werden durch das bisherige Cook & Chill Verfahren die Nahrungsmittel in der Qualität stark beeinträchtigt.

Im Stand der Technik gibt es verschiedene Bestrebungen bisherige Verfahren zu verbessern.

Aus der WO 2007/1207025 ist eine Vorrichtung zur Haltbarmachung von gekochtem Essen bekannt, welche mehrerer Container sowie ein heiz- oder kühlbares Wasserbad umfasst. Die Container sind derart konzipiert, dass ein automatischer Verschluss sicherstellt, dass das Essen nicht mit dem Wasser direkt in Berührung kommt, um eine Verwässerung zu vermeiden. Die Umsetzung der Vorrichtung ist jedoch aufwändig und für den Transport bzw. Lagerung einer Vielzahl von Essensportionen in der Gemeinschaftsversorgung ungeeignet.

In der DE 44 14 814 C1 wird vorgeschlagen, bei der Zubereitung von Lebensmittelspeisen den Kochprozess vor Erreichen eines Garpunktes durch Abkühlen abzubrechen. Im Anschluss werden die Speisen in separate Portionspackungen zur Verteilung an die Kunden abgepackt, wobei diese dezentral in einem 95°C heißen Wasserbad zu Ende gegart werden. Der Kühlprozess erfolgt in einem Kühlschrank. Daher kann nur für kleine Speisemengen, ein schnelles Abkühlen gewährleistet werden. Zudem ist es aufwendig für verschiedene Lebensmittel den optimalen Vorgarpunkt abzupassen, um den Vorgarprozess auf die Endgarung abzustimmen.

Aus der US 3966980 B2 ist ein Verfahren zur Zubereitung und Haltbarmachung von Speisen bekannt, wobei die rohen Zutaten für ein Lebensmittelgericht in einem Plastikbeutelvakuum verpackt werden. Die Beutel mit den rohen Zutaten werden in einem Wasserbad bei Temperaturen bis 100°C gegart und anschließend auf eine niedrige Lagerungstemperatur gekühlt. Zur gewünschten Verzehrzeit können die Speisen durch Aufwärmen in einem Wasserbad auf eine Serviertemperatur gebracht werden. Während das Verfahren die Geschmacksbestandteile der zubereiteten Speisen besser konserviert, ist dieses jedoch nur eingeschränkt für die Gemeinschaftsverpflegung und das Catering geeignet. Insbesondere können nur ausgewählte Kombinationen von rohen Zutaten in die Beutel gegeben werden, welche bei ähnlichen Temperaturen und Garzeiten zubereitet werden können. Die für die Gemeinschaftsessen notwendige Flexibilität in Bezug auf angebotene Speisemenüs und Zutatenkombinationen kann nicht zufriedenstellend bedient werden.

EP 1 344 461 A1 offenbart ein Verfahren zur Herstellung und Konservierung eines Speisegerichtes, wobei ein zu garendes Produkt im rohen oder vorgekochten Zustand in ein Behältnis, beispielsweise eine Kunststoffschale gegeben wird, und durch Zugegeben einer heißen Flüssigkeit (z.B. >70°C) gleichzeitig gart und pasteurisiert. Anschließend wird die Kunststoffschale ggf. unter Zugabe eines Schutzgases versiegelt und auf eine Temperatur von weniger als 8°C innerhalb von weniger als 90 min gekühlt.

US 2014/193554 A1 betrifft ein Verfahren zur Zubereitung eines *ready-to-heat* Speisegerichtes, welches frei von Konservierungsstoffen ist. Hierzu wird eine Speisekomponente, beispielsweise Fleisch, Fisch oder Gemüse, vorgekocht und in einen Behälter gegeben. Im Anschluss wird der Behälter in einen Ofen gegeben, um das Speiseprodukt auf eine Kerntemperatur von 70°C für mind. 1 min zu erhitzen. Zur Konservierung werden die Behälter innerhalb von 30 min bis 120 min auf eine Temperatur von 0°C - 4°C gekühlt.

US 2008/216489 A1 offenbart ein System und Verfahren zur Kühlung heißer Flüssigkeiten, wie kommerziell hergestellte Brühen, Suppen, Saucen, oder Soßen. US 2008/216489 A1 schlägt eine heiße Abfüllung großer Quantitäten der Flüssigkeiten in einem versiegelbaren Container und eine Besprühung mit kaltem Medium vor, wobei es sich auch um Eiswasser handeln kann. US 2008/216489 A1 betrifft mithin eine Kühlung von großen Quantitäten von Lebensmitteln, insbesondere Suppen. Verfahren zur Abfüllung oder Konservierung vereinzelter Verpackungseinheiten werden nicht gelehrt.

### Aufgabe der Erfindung

Die Aufgabe der Erfindung war es ein Verfahren bereitzustellen, welches die Nachteile des Standes der Technik nicht aufweist. Insbesondere sollte ein Verfahren bereitgestellt werden, welches es erlaubt warmzubereitete Speisen haltbar zu lagern, wobei Konsistenz, Geschmack und Nährstoffgehalt der Speisen weitestgehend erhalten bleiben. Zudem sollte das Verfahren durch eine einfache Handhabung und leichte Skalierbarkeit kennzeichnet sein, welche das Verfahren insbesondere für die Gemeinschaftsverpflegung auszeichnet.

### Zusammenfassung der Erfindung

Gelöst wird die Aufgabe durch die Merkmale der unabhängigen Ansprüche. Vorteilhafte Ausgestaltungen der Erfindung sind in den abhängigen Ansprüchen beschrieben.

In einem ersten Aspekt betrifft die Erfindung ein Verfahren zur Zubereitung und Konservierung einer Menge einer Speisekomponente für eine Vielzahl von Verzehrportionen umfassend die Schritte
a. Warme Zubereitung einer Menge der Speisekomponente für eine Vielzahl von Verzehrportionen, wobei die warme Zubereitung ein Erhitzen der Speisekomponente bis zum Garzeitpunkt umfasst und in einem offenen Kochbehälter erfolgt
b. Abfüllen der warmzubereiteten Speisekomponente bei einer Temperatur von mindestens 75°C in eine Vielzahl von Verpackungseinheiten und anschließende Versiegelung der Verpackungseinheiten
c. Kühlung der Verpackungseinheiten von einer Kerntemperatur von mindestens 65°C auf eine Kerntemperatur von weniger als 3°C innerhalb von 90 min oder weniger,
wobei das Abfüllen gemäß Schritt b) des Verfahrens mit Hilfe eines Tiefziehautomaten erfolgt, welcher folgende Schritte ausführt
i. Prägung von Verpackungseinheiten in Schalenform
ii. Abfüllung der Speisekomponenten bei einer Temperatur von mindestens 75°C in die Verpackungseinheiten
iii. Dampfspülung der Verpackungseinheiten mit Wasserdampf einer Temperatur von 100°C oder mehr,
iv. Verschweißen der Verpackungseinheiten,
und wobei die Kühlung der Verpackungseinheiten im Schritt c) in einem Wasserbad erfolgt, dessen Temperatur 3°C oder weniger beträgt.

Bei dem erfindungsgemäßen Verfahren können die Speisekomponenten für ein Speisemenü nach traditionellen handwerklichen Rezepturen hergestellt werden. Insbesondere können frische, qualitativ hochwertige Rohstoffen verwandt werden, um schmackhafte Gerichte zuzubereiten. Die thermische Bearbeitung, d.h. die warme Zubereitung der Lebensmittel bzw. Rohstoffe kann durch den Einsatz von im Bereich der Gemeinschaftsverpflegung bekannten Maschinen und Geräten durchgeführt werden. Eine Verwendung von prozesserleichternden oder haltbarmachenden Zutaten wie Geschmacksverstärker, Farb- und Konservierungsstoffe usw. ist weder notwendig, noch bevorzugt vorgesehen.

Vielmehr zeichnet sich das Verfahren dadurch aus, dass die warme Zubereitung der Speisekomponenten in Schritt a) nach traditioneller Handwerkskunst unter Einsatz von frischen Gemüsen, frischem Fleisch, Kräutern etc. erfolgen kann. D.h. die warme Zubereitung, welche bevorzugt einen Garprozess der Speisekomponenten meint, kann auf ähnliche Weise erfolgen, wie in traditionellen Küchen und von den reichhaltigen Erfahrungen traditioneller Kochkunst profitieren.

Im Hinblick auf eine Gemeinschaftsverpflegung und bevorzugte Bereitstellung einer Vielzahl von Portionen sind die Mengen und das verwandte Kochgerät bevorzugt angepasst. Besonders bevorzugt erfolgt die warme Zubereitung der Lebensspeisen in einer entsprechend eingereichten zentralen Großküche.

Die warm zubereiteten Speisekomponenten werden bevorzugt unmittelbar nach der Zubereitung bei einer noch heißen Temperatur von mindestens 75°C, bevorzugt mindestens 79°C, besonders bevorzugt mindestens 81°C in versiegelbare Verpackungseinheiten abgefüllt.

Im Sinne der Erfindung meint die Verpackungseinheit bevorzugt einen Beutel oder eine Schale, welcher eine Speisekomponente aufnehmen kann und bevorzugt aus einem wasser- und luftdichten Material gefertigt ist. Aufgrund der leichten Handhabbarkeit, des geringen Gewichtes und der Möglichkeit einer Transparenz eignet sich beispielsweise Kunststoff. Bevorzugt ist der Kunststoff hitzebeständig bis zu einem Bereich von 100°C oder mehr, besonders bevorzugt bis zu 130°C oder mehr. Hierbei meint hitzebeständig zum einen eine Wärmeformbeständigkeit, sodass bei den genannten Temperaturen es weder zu einer Dehnung, einem Schrumpfen, einer Zerrung oder andere Verformungen des Materials der Verpackungseinheiten kommt. Weiterhin meint hitzebeständig bevorzugt, dass die in den genannten Temperaturbereichen es zu keinen oder vernachlässigbaren Verdunstungen des Kunststoffes kommt, sodass Geschmacksveränderungen der abgefüllten Speisekomponenten ausgeschlossen werden können. Dem Fachmann auf dem Gebiet der Lebensmittelverpackungen sind geeignete Kunststoffmaterialien hinreichend bekannt.

Die Verpackungseinheiten können unterschiedliche Formen annehmen. Beispielsweise kann die Verpackungseinheit eine im Wesentlichen rechteckige Schale sein, mit einer offenen Seite zum Abfüllen der Speisekomponenten. Zum Verschließen kann eine Deckelfolie verwandt werden. Auch ist ein Beutel einsetzbar, welche an zumindest einer Seite für das Abfüllen eine Öffnung bereithält. Der Beutel kann beispielsweise als an einer der kürzeren Seiten verschlossener Schlauchbeutel ausgebildet sein. Alternativ kann die Verpackungseinheit ein Beutel mit einer Längsnaht und einer verschlossen Naht an einer der einander gegenüberliegenden kürzeren Querseiten sein. Die Abfüllung erfolgt an den jeweils offenen Seiten. Auch Schrumpfbeutel, Siegelrandbeutel oder beliebig andere Formen können zum Einsatz kommen. Beispielsweise kann eine Verpackungseinheit durch eine Kunststofffolie gebildet werden, welche durch Abfüllung der Speisen ihre entsprechende Form erhält.

Im Anschluss an die Abfüllung wird die Verpackungseinheit versiegelt. Im Sinne der Erfindung meint Versiegeln bevorzugt einen Verschluss der Verpackungseinheit, welcher wasser- und luftdicht ist. Nach der Versiegelung soll somit sowohl der Austritt der Speisekomponenten aus den Verpackungseinheiten, als auch eine möglicher Eintritt keimbelasteter Luft verhindert werden.

Die Versiegelung kann auf unterschiedliche Weise vorgenommen werden. Im Fall eines Beutels kann beispielsweise die für die Abfüllung genutzte Öffnung mit einer Schweißnaht verschlossen werden. Im Falle einer Schale ist es bevorzugt die für die Abfüllung genutzte offene Seite mittels einer Deckel- bzw. Oberfolie zu verschließen. Besonders bevorzugt kann sowohl für die Bereitstellung der Verpackungseinheiten, als auch deren Versiegelung ein Tiefziehautomat oder analoge Verpackungsmaschinen genutzt werden. Geeignete Verpackungsmaschinen sind aus dem Stand der Technik bekannt und die Funktionsweise besonders bevorzugter Tiefautomaten wird an gegebener Stelle ausführlich erläutert.

Erfindungsgemäß ist das Verfahren dadurch gekennzeichnet, dass eine Kühlung der Verpackungseinheiten in einem Wasserbad erfolgt, dessen Temperatur 3°C oder weniger beträgt, wodurch die Kerntemperatur der abgefüllten Speisekomponenten von mindestens 65°C auf eine Kerntemperatur von weniger als 3°C innerhalb von 90 min oder weniger geführt wird.

Kerntemperatur meint bevorzugt die Temperatur in der Mitte der in der Verpackungseinheit abgefüllt vorliegenden Speisekomponente. Es ist bekannt, dass von außen bewirkte Temperaturänderungen mit einem örtlichen Temperaturgradienten einhergehen, d.h. während der Kühlung wird die Außentemperatur der Verpackungseinheiten nahezu der Temperatur des Wasserbades entsprechen, wohingegen im Inneren der Verpackungseinheiten die Temperatur der heiß abgefüllten Speisekomponente retardiert sinkt. Die Kerntemperatur zeigt mithin bevorzugt die in der Speisekomponente noch verbleibende Restwärme an und ist somit im Hinblick auf den Kühlungsprozess und unter lebensmittelhygienischen Gesichtspunkten eine besonders relevante Bezugsgröße. Der Begriff der Kerntemperatur ist in analoger Weise auf die im Späteren detaillierter beschriebene Regeneration zu übertragen, wobei die verzögerte Erwärmung zu einer kälteren Kerntemperatur im Vergleich zur Außentemperatur der Verpackungseinheit führt.

Bei der Kühlung der warm zu bereiteten Speisen ist es von erheblicher Bedeutung, dass ein Temperaturbereich von 3° - 65°C insbesondere ein Temperarturbereich von 7° - 50°C schnellst möglich durchlaufen wird. Ursächlich hierfür ist das temperaturabhängige Reproduktionspotential lebensmitteltechnisch relevanter Bakterien und Keime. Zu den besonders hygienisch besonders bedenklichen Bakterien, Viren oder Pilzen gehören beispielsweise Salmonellen, *Escherichia coli,* insbesondere EHEC (Enterohämorrhagische Escherichia coli), STEC, VTEC, *Listerien, Enterobakter Sakazakii, Bacillus cereus, Campylobacter, Staphylococcus aureus, Vibrionen, Clostridium perfringens, Clostridium botulinum, Yersinia enterocolitica*

Salmonellen vermehren sich bevorzugt im Temperaturbereich von 10 - 47°C. Escheria Coli, wie beispielsweise das EHEC, können sich bevorzugt in einem Temperaturbereich von 7°C bis 50°C vermehren. Im Hinblick auf die Vermehrung liegt das Temperaturoptimum für die E. Coli Bakterien bei ca. 37°C. In diesem Bereich erfolgt eine Verdopplung der Bakterienzahl alle 20 min mit der Folge eines exponentiellen Wachstums insofern die Temperatur der Speisekomponente nicht schnellst möglich aus dem für die Vermehrung geeigneten Temperaturbereich geführt wird.

Während der warmen Zubereitung der Speisekomponente bei Temperaturen von über 75°C werden die Keime weitestgehend abgetötet und eine Vermehrung ist ausgeschlossen. Auch in dem Zieltemperaturbereich von weniger als 3°C ist das Vermehrungspotential der Keime minimiert. Der Temperaturpfad der Kühlung ist mithin maßgeblich für eine Begrenzung einer potentiellen Keimlast der warmzubereiten Speisen.

Für die bekannten Cook & Chill Prozesse legt die DIN 10536 daher strenge Anforderungen an den Kühlprozesses (,chill') fest. In den Bestimmungen wird aus den o.g. Gründen gefordert, dass Lebensmittel innerhalb von 90 Minuten, in Ausnahmefällen 120 Minuten von mindestens 65°C auf maximal 3°C abgekühlt werden müssen.

Im Stand der Technik werden zu diesem Zwecke zumeist Kalträume oder zirkulierende Kaltluft verwandt, welche auf Speisekomponenten einwirken, die bevorzugt in offenen Gastronomieschalen gelagert werden. Durch eine Vergrößerung der luftgekühlten Oberfläche wird sichergestellt, dass die Kühlzeiten von weniger als 90 min für einen Temperaturabfall von 65°C auf 3°C eingehalten werden können.

Der luftbasierte Kühlprozess führt jedoch zu nachteiligen Veränderungen der Konsistenz, des Erscheinungsbildes, des Nährstoff- sowie Geschmacksgehalt der Speisekomponenten. In gravierenden Fällen kann es zu Verkrustungen beispielsweise an breiartigen Speisekomponenten wie Kartoffelstampf kommen. Fleisch oder Gemüsespeisekomponenten können auch ausgetrocknete Randschichten aufweisen. Von den Erfindern wurde erkannt, dass jedoch auch wenn sich derart offensichtliche negative Veränderungen nicht einstellen, die Luftkühlung zu einem Geschmacksabfall oder Konsistenzänderungen führt, welche sich oft erst nach der Regeneration zeigen.

Gegenüber den bekannten Verfahren unterscheidet sich die erfindungsgemäße Kühlung zum einen dadurch, dass die Verpackungseinheit die Speisekomponenten vor degenerativen Prozessen während der Kühlung schützt. Zum anderen erfolgt unter Verwendung des Wasserbades mit einer Temperatur von weniger als 3°C eine überaus effektiver und schneller Kühlungsprozess, welcher die Kerntemperatur der Verpackungseinheiten auch deutlich schneller als gesetzlich gefordert durch den unter hygienischen Gesichtspunkten problematischen Temperaturbereich von 7°C bis 50°C führt.

Durch die beschriebenen Verfahrensschritte lassen sich die Speisekomponenten zudem über einen deutlichen längeren Zeitraum von beispielsweise mehr als 21 Tagen haltbar lagern, ohne dass beim Verzehr ein Gesundheitsrisiko besteht.

Auch unter wirtschaftsökonomischen Gesichtspunkten ist das erfindungsgemäße Verfahren von besonderem Vorteil. Zum einen lässt es sich auf einfache und kosteneffiziente Weise in den Verfahrensablauf der Zubereitung von Gemeinschaftsverpflegung integrieren. Insbesondere sind in der Zubereitung keine Limitierungen oder aufwendige Änderungen im Vergleich zu klassischen Cook & Serve Verfahren notwendig. In der frischen Zubereitung der Speisekomponenten können traditionelle, hochwertige Kochverfahren angewandt werden. Dabei entstehen ernährungsphysiologisch wertvolle und geschmacklich unverwechselbare Speise- bzw. Menükomponenten. Diese Menükomponenten sind jedoch empfindlich in ihrer Struktur, da sie ohne jeglichen Einsatz von künstlichen Zugaben wie Emulgatoren, Stabilisatoren und Regulatoren hergestellt werden. Aus diesem Grund wird für die produzierten Speisekomponenten ein neues schonendes Abkühlverfahren und in bevorzugten Ausführungsformen Regenerationsverfahren bereitgestellt. Anstatt die Speisekomponenten unmittelbar zu servieren, werden diese durch die beschrieben Verfahrensschritte konserviert, d.h. haltbar, gemacht, ohne Qualitätseinbußen hinnehmen zu müssen.

Des Weiteren eignen sich die bereitgestellten Verpackungseinheiten für ein platzsparendes, sicheres Lagern und Transport, sodass die Speisekomponenten von einem zentralen Ort der Zubereitung, beispielsweise einer Großküche, auf effiziente Weise zu verschiedenen Endverbraucher transportiert werden können.

In einer bevorzugten Ausführungsform des Verfahrens werden mindestens zwei oder mehr, bevorzugt drei oder mehr Speisekomponenten eines Speisemenüs zubereitet, abgefüllt und gekühlt. Im Sinne der Erfindung bezeichnet ein Speisemenü oder nur Menü bevorzugt ein Gericht mit auf einander abgestimmten Speisekomponenten. Beispielsweise ist es in vielen Kulturkreisen üblich Fleisch mit einer Beilage und/oder einem Gemüse als ein Gericht bzw. Menü zu servieren. Bei einem Speisemenü kann es sich beispielsweise um eine Entenkeule zusammen mit Kartoffelklößen und Rotkohl handeln.

Im Sinne der Erfindung handelt es sich bevorzugt bei den Speisekomponenten, um Bestandteile eines Speisemenüs, welche zusammen zubereitet werden. Im vorgenannten Beispiel können die Entenkeulen bspw. in einem Ofen gebacken werden, während die Kartoffelklöße und der Rotkohl in separaten Kochtöpfen zubereitet werden. Die Speisekomponenten können mithin auch unterschiedliche Rohzutaten umfassen. So kann der Rotkohl als Beilage sowohl Rotkohl als auch weitere Zutaten zur Verfeinerung wie Äpfel, Zucker, Essig etc. umfassen.

Bevorzugt erfolgt das Abfüllen für jede Speisekomponente in separaten Verpackungseinheiten, sodass der Geschmack und die Konsistenz eigenständig aufrechterhalten werden.

Vorteilhafterweise lassen sich die erfindungsgemäßen Vorteile des Verfahrens für eine Vielzahl von verschiedenen Speisekomponenten erzielen. Eine nicht als limitierend zu erachtende Liste umfasst beispielsweise Salzkartoffeln, Kartoffelklöße, Bratkartoffeln, Reis, Nudeln , Vollkornnudeln, Kroketten, Spätzle, Pommes frites, Fleischkomponenten, wie bspw. Hähnchenbrustfilet, Putenschnitzel, Rind- oder Kalbfleisch; Rindersteak, Hackfleischprodukte (Rind, Schwein, gemischt in verschieden Formen wie beispielsweise die Berliner Boulette, Königsberger Klopse etc.), panierte Schweineschnitzel, Bratwurst Schweinekotelett, Lamm , Wiener Würstchen, Ente oder Gans (Brust, Keule), Fisch wie bspw. Seelachs, Zander, Kabeljau, Garnelen, Krabben, Forelle, Lachs, Panierter Fisch, Gemüsebeilagen, wie beispielsweise Mais, Erbsen, Karotten, Paprika, Rote Bete, Rotkohl, Rosenkohl, Spargel sowie separat oder in Verbindung mit den vorgenannten Speisekomponenten verschiedenste Soßen, wie z.B. Bratensoßen, Tomatensoßen, Paprikasoßen, Sahnesoßen etc..

Die vorgenannte Liste stellt keine abschließende Aufzählung dar, sondern zeigt lediglich auf mit welch hoher Flexibilität das Verfahren eingesetzt werden kann, um verschiedenste Speisekomponenten zuverlässig haltbar zu machen, ohne das es zu Qualitätsverlusten kommt.

Durch die genannten Verfahrensschritte insbesondere bei der im Folgenden ausführlicher erläuterten Regeneration mittels eines Wärmebades bleibt überraschender Weise sowohl Gemüse knackig und geschmackig als auch gebratenes Fleisch knusprig und saftig. Weiterhin kann ein überraschend hoher Anteil an sekundären Pflanzenstoffen (bei Gemüse- und Obstkomponenten), an Mineralien, an zahlreichen Mikronährstoffen, an optimalen Ballaststoffen und einer guten Zusammensetzung von Proteinen und Aminosäuren sowie gesunden Fettsäuen festgestellt werden. Sowohl im Hinblick auf das Geschmackserlebnis, als auch die in gesundheitlicher Hinsicht führt das erfindungsgemäße Verfahren daher zu deutlichen Vorteilen ggü. bekannten Verfahren im Stand der Technik.

Die warme Zubereitung erfolgt durch ein Erhitzen der Speisekomponenten bis zu einem Garzeitpunkt, wobei die warme Zubereitung in einem offenen Garbehälter bzw. Gargerät, wie beispielsweise einem Kochtopf, einer Kochschale, einer Pfanne, einem Bräter, einem Dampfgarer, einem Ofen oder dergleichen erfolgt.

Garen meint im Sinne der Erfindung bevorzugt die Behandlung von Lebensmitteln mit Wärme, um deren Konsistenz, Geschmack, Verdaulichkeit und/oder gesundheitliche Wirkung zu verändern. Nach ausreichendem Garen wird das Lebensmittel "gar" genannt. Bekanntermaßen gibt es gibt verschiedene Garmethoden, welche in Abhängigkeit von der Speisekomponente eingesetzt werden können.

Während Ansätze zur Haltbarmachung wie bspw. aus der US 3966980 B2 auf Vakuumgaren (*sous vide*) beschränkt sind, ist das erfindungsgemäße Verfahren für eine Vielzahl von Speisekomponenten und Garmethoden geeignet. Zu diesen gehören bspw. Kochen, Dampfgaren, Dünsten, Schmoren, Braten, Backen, Grillen etc.

Diese und andere traditionellen Garmethoden können eingesetzt werden, wobei der Fachmann weiß, für welche Speisekomponente, welche Garmethode bevorzugt ist.

In einer bevorzugten Ausführungsform ist das Verfahren dadurch gekennzeichnet, dass die Menge einer zubereiteten Speisekomponente ein Gewicht von mehr als 5 kg, bevorzugt mehr als 10 kg besonders bevorzugt mehr als 20 kg aufweist, sodass die Menge bevorzugt für eine Anzahl von mehr als 10, bevorzugt mehr als 50, besonders bevorzugt mehr als 100 Verzehrportionen geeignet ist. Das Verfahren eignet sich mithin besonders für die Zubereitung von Gemeinschaftsessen für eine Vielzahl von Verbrauchern. Zu diesem Zweck ist es bevorzugt, dass die Zubereitung der Speisekomponenten an einem zentralen Ort beispielsweise in einer eigens eingerichteten Großküche erfolgt. Die produzierten gekühlten Verpackungseinheiten können im Anschluss haltbar gelagert und dezentral an die verschieden Abnehmer transportiert werden.

Hierbei kann es sich beispielsweise um Schulen, Kindergärten, Arbeitskantinen etc. handeln. Aufgrund der besonders langlebigen Haltbarkeit von 21 Tagen oder mehr bei einer Temperatur von 8°C oder weniger, kann zudem logistisch eine besonders effektive Verteilung und Transport erfolgen. Beispielsweise kann ein Kindergarten lediglich einmal wöchentlich mit dem gesamten Menü für die jeweilige Woche beliefert werden. Bei bekannten Cook & Serve Verfahren, welche eine unmittelbar, tägliche Auslieferung benötigen oder Cook & Chill Verfahren, welche oftmals auch bei Temperaturen von weniger als 8°C nur eine Haltbarkeit von vier Tagen gewährleisten können, ist eine solche effektive Belieferung nicht möglich.

Aus wirtschaftlicher Sicht, stellen die Logistik und Lieferkosten in der Gemeinschaftsverpflegung einen beträchtlichen Anteil. Insbesondere, wenn kleinere Einrichtung mit einem täglichen Bedarf von weniger als 50 oder gar weniger als 30, 20 Portionen beliefert werden sollen, kann der Kostenanteil für die Logistik an dem Menüpreis 30% oder mehr ausmachen. Um trotz der erhöhten Kosten erschwingliche Preise anbieten zu können, wird leider vielerorts an der Qualität der Zutaten gespart.

Durch die Bereitstellung des erfindungsgemäßen Verfahrens, kann stattdessen auf wirtschaftlich solidem Fundament, insbesondere für kleinere Einrichtung, wie Kindergärten, eine schmackhafte und gesunde Ernährung bereitgestellt werden.

In einer bevorzugten Ausführungsform ist das Verfahren dadurch gekennzeichnet, dass die Verpackungseinheiten ein Fassungsvolumen zwischen 200 ml und 10 Liter, bevorzugt zwischen 1 Liter und 5 Liter, besonders bevorzugt zwischen 2 Liter und 3 Liter aufweisen.

Bevorzugte Fassungsvermögen der Verpackungseinheiten liegen zwischen 200 ml und 10 L, besonders bevorzugt 1 L und 5 L, ganz besonders bevorzugt zwischen 2 L und 3 L. Auch Zwischenbereiche aus den vorgenannten Bereichen können bevorzugt seien, wie beispielsweise 200 ml bis 500 ml, 500 ml bis 1 L, 500 ml bis 3 L, 1 L bis 2 L, 2 L bis 3 L, 3 L bis 4 L, 4 L bis 5 L, 6 L bis 7 L, 8 L bis 9 L oder 9 L bis 10. Ein Fachmann erkennt, dass die vorgenannten Bereichsgrenzen auch kombiniert werden können, um weitere bevorzugte Bereich zu erhalten, wie beispielsweise 500 ml bis 2 L oder auch 1 L bis 3 L. Die vorgenannten Verpackungsgrößen stellen im Hinblick auf den Herstellungsprozess, und Kühlungsprozess, ein effizientes Lagern, Ausliefern und Regenieren eine optimale Balance dar.

Besonders gute Ergebnisse für eine schnelle Kühlung können mit Verpackungseinheiten mit den bevorzugten Fassungsvermögen von 200 ml bis 10 L, besonders bevorzugt 500 ml bis 5 L, ganz besonders bevorzugt 1 L bis 3 L erzielt werden. Überraschenderweise ist aber eine DIN-Norm konforme Kühlung auch mit größeren Volumina möglich, wobei im letzteren Fall es bevorzugt ist, flache Verpackungseinheiten mit einer erhöhten Oberfläche zu verwenden.

Flach meint bevorzugt ein Verhältnis der Dicke der Verpackungseinheit zur Länge oder Breite der Verpackungseinheit von 1:2, 1:3, 1:4, 1:5, 1:10 oder mehr.

Für die Kühlung werden bevorzugt noch mindestens 65 °C heiße, in der Verpackungseinheit verpackten Speisekomponenten, in einem Wasserbad mit einer Temperatur von weniger als 3°C, bevorzugt bei einer Temperatur von ca. 1°C abgekühlt.

Zu diesem Zweck kann beispielsweise ein nach oben geöffneten Wassertank bereitgestellt werden.

In einer bevorzugten Ausführungsform des Verfahrens ist das Wasserbad für die Kühlung der Verpackungseinheiten mit einem oder mehreren Tauchkörben mit Fächern für die Verpackungseinheiten bestückt. Besonders bevorzugt ist es dabei, dass ein Durchlaufkühler mit dem Wasserbad verbunden ist, um eine Temperatur von 3°C oder weniger während der Kühlung zu gewährleisten.

Bei der Ausführungsform wird das Wasserbad bzw. der Wassertank mit Tauchkörben, bevorzugt Edelstahlkörben, bestückt, in welche die Verpackungseinheiten eingeschichtet werden können. Der Wassertank bzw. das Wasserbad kann somit bevorzugt Lage für Lage bis zur Oberkante des Wassertanks gefüllt werden. Vorteilhafterweise entsteht durch die Verwendung zwischen den Körben ein Zwischenraum, wodurch Wasser zirkulieren kann. Nach dem Einfüllen der Verpackungseinheiten in den Wassertank ist es bevorzugt diesen ebenfalls bis zur Oberkante mit Wasser zu befüllen. In diesem Falle wird ein maximales Volumen des Wasserbades (d.h. des Volumen des Wärme-Übertragungsmedium erreicht), wobei das innere Volumen des Wassertanks dem Volumen des Wasserbades entspricht.

Als besonders vorteilhaft hat es sich zu dem erwiesen, einen Wärmetauscher bzw. Durchlaufkühler zu verwenden. Der Durchlaufkühler verfügt bevorzugt über einen Ansaug- und einen Einströmkanal mit welcher dieser mit dem Wassertank verbunden ist. Bevorzugt wird mittels des Ansaugkanales auf der einen Seite des Wassertanks das durch die Verpackungseinheiten aufgewärmte Wasser abgesaugt, während das durch den Durchlaufkühler auf weniger als 3°C besonders, bevorzugt 1°C, abgekühlte Wasser wieder einströmt. Als beispielhafte geeignete Wärmetauscher bzw. Durchlaufkühler seien Geräte der Firma HYFRA Industriekühlanlagen GmbH, Baureihe HYFRA Sigma genannt.

Ausgezeichnet Kühlungsergebnisse und Temperaturverläufe der Kerntemperatur können erzielt werden, bei einer Volumenaustauschrate mittels des Durchlaufkühlers, welche das Volumen des Wassertanks (bspw. 2500 L) innerhalb von weniger als 90min, bevorzugt weniger als 60 min, besonders bevorzugt 30 min oder weniger austauscht.

Das Verfahren ist dadurch gekennzeichnet, dass das Abfüllen gemäß Schritt b) des Verfahrens mit Hilfe eines Tiefziehautomaten erfolgt, welcher folgende Schritte automatisiert ausführt:
i. Prägung von Verpackungseinheiten in Schalenform, bevorzugt aus einer Transponderfolie
ii. Abfüllungen der Speisekomponenten bei einer Temperatur von mindestens 75°C in die Verpackungseinheiten
iii. Dampfspülung der Verpackungseinheiten mit Wasserdampf einer Temperatur von 100°C oder mehr, bevorzugt 120°C, 130°C oder mehr
iv. Verschweißen der Verpackungseinheiten, bevorzugt mittels einer Oberfolie
Im Sinne der Erfindung meint ein Tiefziehautomat bevorzugt ein automatisiertes System mit mindestens einer Tiefziehstation zur Prägung von Verpackungseinheiten sowie einer Siegelstation zur Versiegelung der Verpackungseinheiten sowie ggf. weiteren Arbeitsstationen zur Vollziehung der notwendigen Schritte zum Abfüllen und Verschweißen der Verpackungseinheiten. Bevorzugt werden die verschiedenen Arbeitsstationen durch ein Fließband miteinander verbunden, welches einen automatisierten Transport der Verpackungseinheiten von der Prägung über das Abfüllen bis zur Versiegelung ermöglicht.

Die Prägung meint bevorzugt die Formung von Verpackungseinheiten aus einem dafür geeigneten Material, bevorzugt aus Kunststofffolien, zu einer Form, welche zur Aufnahme der abzufüllenden Speiskomponenten geeignet ist. Schalenform meint eine Form der Verpackungseinheit, welche eine Vertiefung zur Aufnahme der Speisekomponente aufweist. Beispielsweise können rechteckige Schalen bevorzugt zur Abfüllung verwandt werden. Es können aber auch Verpackungseinheiten in Form einer Unterfolie mit Muldenform vorgefertigt werden, in welche die Speisekomponenten abgefüllt werden. Bei Verwendung einer Weichfolie (*flexible film*) kann die Endform der Verpackungsschale sich flexibel an die abgefüllte Menge der Speisekomponenten anpassen. Im Fall der Verwendung von Hartfolien (*semi-rigid*) wird die Verpackungseinheit die geprägte Form, bevorzugt Schalenform, auch während des Abfüllvorganges aufweisen. Besonders bevorzugt kommt eine Transponderfolie zum Einsatz, welche für die Lebensmittelindustrie zugelassen ist.

In einer besonders bevorzugten Ausführungsform wird aus einer für die Lebensmittelindustrie zugelassenen Transponderfolie mit Hilfe von Druckluft und einem flexiblen Werkzeug eine für die Verpackungseinheit gewünschte Größe einer Schale geformt. Die geformten Schalen sind nach der Prägung bevorzugt hintereinander folgend miteinander verbunden und laufen mit einer einstellbaren Taktung, bevorzugt mittels eines Fließbandes, durch den Abfüllbereich der Maschine.

Der Abfüllvorgang kann durch eine automatisierte Abfüllstation als Bestandteil der Tiefziehmaschine erfolgen oder manuell durchgeführt werden. Im letzteren Fall wird der Tiefziehautomat bevorzugt einen zugänglichen Bereich des Fließbandes umfassen, um das manuelle Abfüllen zu ermöglichen.

Erfindungsgemäß erfolgt das Abfüllen der Speisekomponenten, während diese noch heiß sind und eine Temperatur von mindestens 75°C, bevorzugt 81 - 95 °C aufweisen. Die Speisekomponenten werden somit im sog. Hot Fill Verfahren in der Verpackungsmaschine verpackt.

Vor der Versiegelung der Verpackungseinheiten erfolgt bevorzugt eine Dampfspülung mittels Wasserdampf einer Temperatur von 100°C oder mehr, bevorzugt 120°C, 130°C oder mehr. Hierdurch wird der Kopfraum der Verpackungseinheit, d.h. der Raum der Verpackungseinheit oberhalb der abgefüllten Speisekomponente, durch heißen Wasserdampf, bevorzugt der o.g. Temperaturbereiche ersetzt. Zu diesem Zweck ist eine entsprechende Dampferzeugungseinheit bevorzugt unmittelbar in der Versiegelungsstation integriert, sodass nach der Dampfspülung ein Verschweißen ohne Verzug erfolgt.

Durch die Dampfspülung kann sichergestellt werden, dass offene Oberflächen der Verpackungseinheiten oder der Speisekomponenten von anhaftenden Keimen befreit werden und unmittelbar vor dem Verschweißen eine keimfreie Verpackungseinheit vorliegt.

Das Verschweißen der Verpackungseinheiten erfolgt bevorzugt auf im Stand der Technik bekannte Weise mittels einer Deckel- oder Oberfolie, welche die Abfüllöffnung der Schale verschließt. Hierbei können beispielsweise Verbundfolien zum Einsatz kommen, welche eine Trägerschicht und Siegelschicht aufweist. Deckelfolien auch aus Verbunden wie PA/PE oder aus kaschierten Verbunden bestehen. Einem Fachmann auf dem Gebiet der Verpackungstechnik sind die oben beschriebenen Techniken und Materialien bekannt. Er wird mithin eine geeignete Folie und Verfahren auswählen, um eine Versiegelung zu erreichen, die den lebensmitteltechnischen Anforderungen gerecht wird. Bevorzugt entsteht eine Verpackungseinheit mit gefüllter Speisekomponente ohne Lufteinschlüsse.

Bevorzugt erreicht das Verschweißen ein luft- und flüssigkeitsdichtes Verschließen der Verpackung, welches den Eintritt von Keimen gänzlich ausschließt. Durch das Verschweißen in unmittelbare Folge auf die Dampfspülung werden in Verbindung mit der erfindungsgemäßen Kühlung besonders lange Haltbarkeitszeiten der Speisekomponenten erreicht. Die Speisekomponente ist hermetisch abgeriegelt und keimarm verpackt. Das Produkt ist durch das Verfahren ohne nachgelagerte Pasteurisierung bevorzugt für 21 Tage oder mehr haltbar. Farbe, Konsistenz, Geschmack und Nährstoffgehalt der Speiskomponenten bleiben vollständig erhalten.

Erwünschte bzw. gesetzlich geforderte Angaben können durch eine Kennzeichnung der Ober- bzw. Deckelfolie auf die Verpackungseinheit aufgebracht werden. Hierzu kann der Tiefziehautomat beispielsweise einen Foliendrucker umfassen.

Das Prägen, Abfüllen, Dampfspülen und Versiegeln der Speisekomponenten mittels eines Tiefziehautomaten ist im Stand der Technik bekannt und ein Fachmann ist in der Lage geeignete Geräte bereitzustellen. Geeignete Tiefziehautomaten bzw. Systeme sind auch kommerziell erhält. Derartige Geräte werden beispielsweise von der VARIOVAC PS SystemPack GmbH unter der Produktreihe Primus, Primus MP, Optimus (jeweils konzipiert für Variosteam Anwendungen) angeboten.

In einem weiteren Aspekt betrifft die Erfindung ein Verfahren zur Konservierung einer warmzubereiteten und in einer Vielzahl von Verpackungseinheiten abgefüllten Speisekomponente sowie Lagerung und Erwärmung der Verpackungseinheiten zum Verzehr, umfassend die folgenden Schritte
I. Konservierung einer warmzubereiteten und in einer Vielzahl von Verpackungseinheiten abgefüllten Speisekomponente mittels des beschriebenen Verfahrens
II. Lagerung der Verpackungseinheiten bei einer Kerntemperatur von 8°C oder weniger
III. Erwärmung der Verpackungseinheiten, bevorzugt am gewünschten Ort des Verzehrs, von einer Kerntemperatur von weniger als 8°C, auf eine Kerntemperatur von mehr als 65°C, bevorzugt auf eine Kerntemperatur zwischen 70°C und 74°C in einem Wasserbad bei einer Temperatur zwischen 80°C und 90°C, bevorzugt 83°C - 87°C, besonders bevorzugt ungefähr 85°C.

Die gekühlte Lagerung der Verpackungseinheiten schließt sich bevorzugt unmittelbar an die Kühlung auf eine Kerntemperatur von weniger als 3°C an. Eine Kühlunterbrechung ist zu vermeiden, sodass zwischen der Kühlung im Wasserbad und anschließend gekühlten Lagerung die Kerntemperatur der Verpackungseinheiten von weniger als 3°C auf höchsten 8°C ansteigen darf. Die gekühlte Lagerung kann zunächst bevorzugt zentral in einem Kühllager am Ort oder in der Nähe der Zubereitung der Speisekomponenten erfolgen. Ein derartiges Kühllager kann beispielsweise in unmittelbarer Nähe zu einer für die Zubereitung der Speisekomponenten eingerichteten Großküche bereitgestellt werden.

Anschließend erfolgt bevorzugt ein Ausliefern, der Speisekomponenten an die verschiedenen dezentralen Abnehmer, beispielsweise Schulen, Kindergärten, aber ggf. auch Einzelpersonen oder Supermärkte. Während der Lieferung und bei den Abnehmer wird die Kühlung von 8°C oder aufrechterhalten. Auch während der Auslieferung sollte die Kühlkette nicht unterbrochen werden, um die besonders langen Haltbarkeitszeiten der Verpackungseinheiten zu gewährleisten.

In praktischer Hinsicht, haben sich die bevorzugten Fassungsvolumina von 200 ml und 10 Liter, bevorzugt zwischen 1 Liter und 5 Liter, 2 Liter und 3 Liter als besonders vorteilhaft erwiesen. Zum einen erlauben diese ein platzsparendes Ausliefern. Zum anderen sind die Verpackungseinheiten bei den Endabnehmern leicht in bestehende Kühlgeräte (Kühlschränke etc.) einschichtbar. Auch kann durch die versiegelten Verpackungseinheiten, insbesondere bei Volumina von 1-5 Liter sichergestellt werden, dass selbst eine kurzzeitige Aussetzung der Verpackungseinheiten einer Raumtemperatur keine Erhöhung der Kerntemperatur zur Folge hat.

Bei den Abnehmern kann es sich bevorzugt um Gemeinschaftseinrichtungen, wie Schulen, Kindergärten, Krankenhäuser, Arbeitskantinen etc. handeln. Es können jedoch auch einzelne Abnehmern beliefert werden. Bei bisherigen Konzepten des Essens auf Rädern wird an einzelne Kunden, beispielsweise Senioren, Cook&Hold verwandt, d.h. Speisemenüs werden unmittelbar nach deren Zubereitung noch heiß ausgeliefert, wobei temperaturisolierende Behälter die Wärme halten. Die tägliche Zustellung einzelner Portionen ist logistisch ein erheblicher Aufwand, welcher zu deutlichen Mehrkosten pro Speisemenü führt. Auch werden durch das Warmhalten über einen Zeitraum von häufig mehreren Stunden der Geschmack und die Konsistenz der Speisen beeinträchtigt. Beispielsweise gart das Gemüse während des Warmhaltens nach und hat beim Endabnehmer an Bissfestigkeit verloren.

Demgegenüber erlaubt das erfindungsgemäß Verfahren ein gekühltes Ausliefern mehrerer Portionen für die gesamte Woche. Durch den wöchentlichen, anstatt täglichen Transport zu den Einzelkunden, können unnötige Fahrten vermieden werden. Die gesparten Kosten können stattdessen in hochqualitative Lebensmittel für die Zubereitung der Speisen investiert werden.

Die Regeneration der Speisekomponenten erfolgt bevorzugt am gewünschten Ort des Verzehrs, d.h. z.B. in der jeweiligen Gemeinschaftseinrichtung (Kindergarten, Schule etc.) oder beim Einzelabnehmer mittels eines Wasserbades.

Im Sinne der Erfindung meint Regeneration bevorzugt die Wiederherstellung der Speisekomponente von einem gekühlten Zustand während der Lagerung zu einer Temperatur, welche für den Verzehr angenehm ist.

Besonders bevorzugt erfolgt die Erwärmung mittels eines Wasserbades mit einer Temperatur zwischen 80°C und 90°C von einer Kerntemperatur von weniger als 8°C auf eine Kerntemperatur von mehr als 65°C, bevorzugt auf eine Kerntemperatur zwischen 70°C und 74°C.

Die Zeit der Regeneration bzw. Erwärmung wird bevorzugt an die Größe der Verpackungseinheiten angepasst. So wird beispielsweise bei bevorzugt kleineren Fassungsvolumina für einzelne Abnehmer von 200 ml und 1 L ein kürzerer Verbleib im Wärmebad notwendig sein, als bei größeren Verpackungseinheiten für Gemeinschaftseinrichtung mit Fassungsvolumina zwischen 1 L und 10 L.

Für besonders bevorzugte Fassungsvolumina der Verpackungseinheiten von 1 L bis 5 L, bevorzugt von 2 L bis 3 L, hat sich ein Zeitraum von 35 min bis 55 min, besonders bevorzugt von 40 min bis 50 min, ganz besonders bevorzugt von ungefähr 45 min als vorteilhaft erwiesen.

In einer bevorzugten Ausführungsform des Verfahrens erfolgt daher die Erwärmung der Verpackungseinheiten in einem Zeitraum zwischen 35 min und 55 min.

Durch die beschriebene Erwärmung der Speisekomponenten in einem Wasserbad von 80°C bis 90°C, bevorzugt 83°C - 87°C, besonders bevorzugt ungefähr 85°C, können ausgezeichnete Ergebnisse bei der Regeneration erzielt werden. Verschiedenste Speisekomponenten von Fleischprodukten wie Entenkeule, über Gemüsebeilagen wie Rotkohl bis hin zu Kartoffelpüree können mittels des Wasserbades derart regeneriert werden, dass eine in jeglicher Hinsicht vergleichbare Qualität zu frisch zubereiteten Speisen erreicht wird. Aufgrund des verwandten Temperaturbereiches von 80°C - 90°C wird ein unerwünschtes Nachgaren vermieden. Die schonende Zubereitung ist aufgrund der Mindesttemperatur von 80°C dennoch schnell genug, um die Struktur verschiedenster Speisekomponenten zu erhalten. Der Temperarturbereich von 80°C- 90°C, hat sich somit als überraschend vorteilhaft erwiesen.

Die bevorzugte Regeneration bei entsprechend temperierten Wasserbad stellt sicher, dass die mit dem erfindungsgemäßen Verfahren konservierte Qualität der Speisekomponenten nicht in den letzten Verfahrensschritten vor dem Verzehr abhandenkommt.

Im Stand der Technik ist es insbesondere in Gemeinschaftsküchen verbreitet, konserviert verpackte Menükomponenten in großen Bain-Marie Behältern mittels Heißluft zu regenerieren. Der damit einhergehende Feuchtigkeitsverlust führt zur Austrocknung und Qualitätsverlusten sowohl im Hinblick auf den Geschmack, die optische Ansehnlichkeit als auch den Gehalt an Nährstoffen und Spurenelementen.

Demgegenüber werden bei dem beschriebenen Verfahren sowohl Geschmack, Konsistenz als auch Nährstoffgehalt der hohen qualitative Zubereitung aufrechterhalten. Überraschenderweise können mittels des gewählten Wärmebades auch bessere Ergebnisse erzielt werden, als dies mit herkömmlichen Aufwärmmethoden mittels entsprechenden Koch- oder Bratbehälter der Fall ist. Bei einem individuellen Aufwärmen der Speisekomponenten in separaten Kochtöpfen, Bratpfannen oder dergleichen ist es überaus schwierig die optimale Aufwärmtemperatur und Aufwärmzeit abzupassen, bei welchem eine Regeneration abgeschlossen ist, ohne dass die Speisekomponenten weitergaren und wertvolle Nähr- und Geschmacksstoffe degenerieren. Mit dem erfindungsgemäßen Regenerationsverfahren erfolgt eine kontrollierte Erwärmung unter wiederholbaren Konditionen, welche Abweichungen kompensiert und zuverlässig zu zufriedenen stellenden Ergebnissen führt.

Die Kombination der Verfahrensschritte der Kühlung zusammen mit der Regeneration führt mithin im Ergebnis zu synergistische Effekten, die deutlich über eine Aggregation der einzelnen Merkmale hinausgehen.

Zur Durchführungen der Regeneration können grundsätzlich verschiedenen Vorrichtungen verwandt werden, welche eine genaue Einstellung der Temperatur eines Wasserbades zwischen 80°C und 90°C erlauben. Die erfindungsgemäßen Vorteile des Regenerationsverfahrens lassen sich jedoch auf besonders einfache und zuverlässige mit einer eigens zu diesem Zweck entwickelten Vorrichtung erzielen.

In einer bevorzugten Ausführungsform ist das Verfahren dadurch gekennzeichnet, dass für die Erwärmung der Verpackungseinheiten eine Vorrichtung verwandt wird, umfassend
- ein Gehäuse
- einen Wassertank zur Aufnahme von Wasser sowie einen Deckel zum Verschließen des Wassertanks
- ein Tauchkorb mit Fächern für Verpackungseinheiten von gekühlt konservierten Speisekomponenten zur Einbringung in den Wassertank
- mindestens ein elektrisches Heizelement zur Erhitzung des Wassers
- eine Pumpe zum Umwälzen des Wassers
- eine Steuereinheit
wobei die Steuereinheit konfiguriert ist während eines Aufwärmprozesses die Stromzufuhr zum elektrischen Heizelement derart zu regulieren, dass die Wassertemperatur bei einer festeingestellten Aufwärmtemperatur in einem Bereich von 80°-90°C für eine vorbestimmte Aufwärmzeit gehalten wird.

Im Sinne der Erfindung meint ein Wassertank bevorzugt einen Behälter, welcher flüssigkeitsdicht ist und sich zur Aufnahme von Wasser eignet. Für den Wassertank können verschiedenen Materialien zum Einsatz beispielsweise Kunststoff, Metallelemente, insbesondere Eisen, Aluminium oder Kupfer, und Metalllegierungen, insbesondere Bronze, Messing, oder Stahl, besonders bevorzugt Edelstahl. Diese Materialien weisen eine hohe Beständigkeit und eine ansprechende Optik auf. Besonders bevorzugte Materialien, wie Edelstahl, sind zudem rostfrei, sodass unnötiger Verschleiß vermieden wird. In einigen Ausführungsformen kann es auch bevorzugt sein, den Wassertank auf der Innenfläche mit einer Beschichtung zu verkleiden, welche die Widerstandsfähigkeit bzw. chemische Beständigkeit erhöht, beispielsweise mittels einer Emaille oder einer Keramikbeschichtung.

In Bezug auf die Form kann der Wassertank unterschiedlich ausgestaltet sein, bevorzugte Ausführungsformen sind beispielsweise zylinderförmig oder rechteckig. Bevorzugt umfasst der Wassertank einen Boden, eine oder mehrere Mantelflächen sowie eine obere Öffnung zum Einbringen der Verpackungseinheiten. Die obere Öffnung ist mittels des Deckels verschließbar. Die Öffnungen und der Deckel sind mithin bevorzugt kongruent und von gleicher Größe.

Das Gehäuse gewährleistet im Wesentlichen eine Ummantelung des Wassertanks sowie der weiteren technischen Komponenten der Vorrichtung, u.a. der Steuereinheit oder Pumpe. Das Gehäuse stabilisiert die Vorrichtung und schützt vor äußeren Einflüssen. In einer bevorzugten Ausführungsform besteht das Gehäuse aus Edelstahlblech, welches mit einem gepressten Halterblech bzw. Überlappungsblech zum Wassertank im oberen Teil des Gehäuses ausgestattet ist. Das Halteblech bzw. Überlappungsblech erhöht den Zusammenhalt des Gerätes und schützt insbesondere in Verbindung mit zwei zusätzlichen Dichtungen (zur äußeren Ummantelung sowie zum Wassertank) die Gerätetechnik und elektronischen Komponenten vor Wasserschäden.

Das Gehäuse ist somit bevorzugt wasserbeständig, sodass auch bei einer hohen Luftfeuchtigkeit oder dem Verschütten von Flüssigkeit auf die Vorrichtung innere elektronischen Bauteile intakt bleiben und es zu keinem Kurzschluss kommt. In bevorzugten Ausführungsformen sind an dem Gehäuse Räder, bevorzugt fixierbare Räder, angebracht, sodass die Vorrichtung freistehend geschoben und für Anwendungszwecke festgestellt werden kann.

Ein Tauchkorb bezeichnet bevorzugt eine Vorrichtung zur Einschichtung bzw. Aufnahme der Verpackungseinheiten, welche eigens zu diesem Zweck dimensionierte Fächer aufweist. Bevorzugt wird jedes der Fächer von mindestens zwei Gitterflächen begrenzt. Bevorzugt liegen die Verpackungseinheiten auf einer unteren Gitterfläche auf und werden von einer oberen Gitterfläche am Aufschwemmen gehindert. Somit werden sowohl Speisekomponenten mit höherer Dichte als Wasser (z.B. Fleisch), als auch mit geringere Dichte (z.B. Nudel) zuverlässig in den Fächern gehalten. Die Gitterflächen können beispielsweise von Metallgittern gebildet werden, wobei die Gitteröffnungen einen gleichmäßigen Wasseraustausch und Oberflächenumspülung der Verpackungseinheiten gewährleisten. Die Verwendung eines Tauchkorbes erlaubt nicht nur eine einfache Handhabung für das Befüllen des Wassertanks mit den Verpackungseinheiten, sondern gewährleistet zudem durch die vorgegeben Gitterfächer eine gleichmäßige Verteilung der Verpackungseinheiten im Wassertank, sodass alle Verpackungseinheiten gleichmäßig und zuverlässig erwärmt werden.

Bei dem elektrischen Heizelement handelt es sich um ein Bauteil, mit welchem einer Wassermenge im Wassertank Wärmeenergie zugeführt werden kann. Bevorzugt umfasst das elektrische Heizelement einen Leistungswiderstand, beispielweise eine Heizwendel, bei welcher in Abhängigkeit des Stromflusses eine wohldefinierte Temperatur generiert wird. Der Leistungswiderstand bzw. die Heizwendel ist elektrisch gegenüber dem zu erwärmenden Wasser isoliert und kann beispielsweise in einer Rohrummantelung vorliegen. Im Stand der Technik sind verschiedene elektrische Heizelemente bekannt. Beispielsweise werden diese in Haushaltsgeräten wie Durchlauferhitzern, Waschmaschinen, Toastern, Haartrocknern, Bügeleisen, Kaffeemaschinen etc. eingesetzt.

Im Sinne der Erfindung ist die Steuereinheit bevorzugt ein eine einfache elektrische Schaltung, ein Prozessor, ein Prozessorchip, Mikroprozessor, ein Mikrokontroller oder ein integrierter Schaltkreis welcher konfiguriert ist, um elektrischen Komponenten der Vorrichtung, wie beispielsweise die Pumpe oder das Heizelementes, zu steuern. Die Steuereinheit ist insbesondere dafür konfiguriert die Temperatur des Wassers innerhalb des Wassertanks mit Hilfe des mindestens einen Heizelementes gemäß vorgegebener Werte zu regulieren und während des Aufwärmprozesses bei einer Aufwärmtemperatur ausgewählt aus einem Bereich von 80°-90°C, bevorzugt von 85°C, zu halten.

Bevorzugt kann die Steuereinheit durch die Vorgabe einer vordefinierten Stromzufuhr zum Heizelement kontrollieren, welche Temperatur im Wassertank vorliegt. Beispielsweise kann mit Hilfe einer Kalibration die Korrelation zwischen Stromfluss und/oder Spannung an dem Heizelement mit der Temperatur in einem gefüllten Wassertank ermittelt werden.

Besonders bevorzugt ist es jedoch, die Wassertemperatur mit Hilfe einer Feedbackschleife zu regulieren. So kann es bevorzugt sein einen Temperatursensor einzusetzen, welcher die Temperatur der Wassermenge im Wassertank bestimmt, wobei die Steuereinheit anhand des Temperatursensors die Stromzufuhr zum elektrischen Heizelement reguliert.

Zu diesem Zweck kann die Steuereinheit beispielsweise einen Prozessor, Mikroprozessor oder einen integrierter Schaltkreis umfassen, welcher Messdaten auswerten und Stromparameter festlegen kann. Es kann aber auch bevorzugt sein, als Temperatursensor ein Thermostat zu verwenden, welches auf eine vorgegebene Temperatur beispielsweise 85°C eingestellt ist und eine Stromzufuhr lediglich bei Temperaturen unterhalb von 85°C zulässt, wohingegen bei Temperaturen oberhalb von 85°C automatisch eine Unterbrechung der Stromzufuhr erfolgt. Auf diese Weise kann die Temperatur überaus effizient und zuverlässig gesteuert werden.

Zur Aufrechterhaltung einer homogenen Temperaturverteilung innerhalb des Wassertanks ist in der Vorrichtung die Verwendung einer Pumpe vorgesehen.

Im Sinne der Erfindung meint eine Pumpe bevorzugt ein Gerät zum An- oder Absaugen von Flüssigkeiten, bevorzugt Wasser. Besonders bevorzugt handelt es sich um eine Umlauf- Umwälzpumpe, welche beispielsweise Wasser aus dem unteren Ende des Wassertanks absaugt, um dieses zum oberen Ende zu leiten. Beispielsweise kann es sich um eine HST-Zirkulationspumpe handeln. Die Pumpe, bevorzugt eine Umwälzpumpe, kann somit dafür sorgen, dass das Wasser bei der Erhitzung ständig an den Heizelementen vorbeigeführt wird, um ein schnelles Aufheizen zu realisieren bzw. zu gewährleisten, dass eine gewünschte Aufwärmtemperatur gehalten wird. Der Antrieb der Pumpe erfolgt bevorzugt elektrisch, über einen entsprechenden elektrischen Motor.

In einer bevorzugten Ausführungsformen kann der Wassertank zudem ein Wellenrad oder einen andere Zirkulationsvorrichtung (Propeller etc.) umfassen, welches das Wärme-Übertragungsmedium Wasser in Bewegung hält, damit die eingesetzte Energie in der kürzesten Zeit seinen maximalen Wirkungsgrad erzielt.

Durch Verwendung einer Pumpe, ggf. unterstützt durch einen Wellenrad, werden die Verpackungseinheiten in dem mit Gitterfächer ausgestatteten Tauchkorb stets von optimal temperiertem Wasser umspült.

Das Zusammenspiel der Komponenten einer Pumpe, sowie ggf. einem Wellenrad, mit dem Tauchkorb liefern ausgezeichnete Ergebnisse in Bezug auf die Wärmeverteilung innerhalb des Wassertanks und sorgen für eine gleichmäßige Umspülung der Verpackungseinheiten sowie qualitative hochwertige Regeneration.

Bei Zugabe von gekühlten Verpackungseinheiten, beispielsweise bei einer Temperatur von weniger als 3°C, sinkt die Temperatur im Wasserbad kurzzeitig. Die Regulation der Vorrichtung führt die Temperatur jedoch schnell und zuverlässig in dem Bereich von 80°-90°C, besonders bevorzugt von 85°C nach.

Die Vorrichtung ist mithin auf besondere Weise dafür geeignet ein Regenerationsverfahren durchzuführen und eine schone Erwärmung der Speiskomponenten zu gewährleisten, welche die Struktur, den Geschmack und Nährstoffgehalt der Speisen erhält.

Die Steuereinheit ist dafür konfiguriert, die Wassertemperatur bei einer Aufwärmtemperatur von 80°-90°C min für eine vorbestimmte Aufwärmzeit zu halten. Durch die Erwärmung der Speisekomponenten in einem Wasserbad von 80°C bis 90°C, bevorzugt 83°C - 87°C, besonders bevorzugt ungefähr 85°C können, wie obig erläutert, besonders gute Ergebnisse bei der Regeneration erzielt werden.

Eine Regeneration mittels der Vorrichtung bei einem durch die Komponenten der Vorrichtung genau kontrollierten und temperierten Wasserbad stellt zudem sicher, dass eine konservierte Qualität der gekühlten Speisekomponenten nicht bei der Aufwärmung vor dem Verzehr abhandenkommt.

In einer bevorzugten Ausführungsform ist die Aufwärmtemperatur in der Vorrichtung festeingestellt ist. Festeingestellt meint in Bezug auf die Aufwärmtemperatur bevorzugt, dass die Vorrichtung keine Möglichkeit einer Änderung oder Auswahl der Aufwärmtemperatur durch einen Nutzer vorsieht.

Eine Aufwärmtemperatur ausgewählt aus einem Bereich zwischen 80°C und 90°C ist mithin bevorzugt als ein Prozessparameter für die Vorrichtung vorgegeben, ohne dass das Änderungen von außen durch einen Nutzer vorgesehen sind. Bei im Stand der Technik bekannten Vorrichtungen ist zumeist vorgesehen verschiedenen Temperaturen für die Wasserbäder einzustellen. Beispielsweise werden in bekannte *sous-vide* Vorrichtungen verschieden einstellbare Wasserbadtemperaturen vorgesehen, um die Gartemperaturen an unterschiedliche Komponenten anzupassen.

Die Erfinder haben erkannt, dass für die Regeneration gekühlt konservierten Speisekomponenten für die Gemeinschaftsverpflegungen sich derartige Einstellmöglichkeiten nachteilig auf die Regenerationsergebnisse auswirken können.

So wurde unter Durchführung zahlreicher Versuchen eine überraschend optimale Regenerationstemperatur im Bereich von 80°C bis 90°C, bevorzugt ungefähr 82°C-87°C, besonders bevorzugt ungefähr 85°C ermittelt. Mögliche Abweichungen durch individuelle Nutzereinstellungen führen im Kontext eines für die Gemeinschaftsverpflegung optimierten Verfahrens erfahrungsgemäß nicht zu einer Verbesserung, sondern Verschlechterung der Qualität. So ist es bevorzugt zur Bereitstellung von qualitativ hochwertiger Gemeinschaftsverpflegung die Prozessschritte aufeinander abzustimmen und besonders gute Regeneration durch wiederholbare, konstante Prozessbedingungen gewährleistet werden. Die bevorzugte Ausführungsform stellt dies durch einfache Mittel der Festlegung einer Aufwärmtemperatur sicher.

Eine derartige Ausführungsform schützt auch vor Fehlbedienungen. So ist es nicht ungewöhnlich, dass in Gemeinschaftseinrichtungen mit festen Essenszeiten (z.B. Krankenhäuser, Kindergärten, etc.) ein Zeitdruck nicht selten dazu führt, dass Mitarbeiter bei bekannten Aufwärmvorrichtungen (insbesondere Heißlüftern) die vorgesehenen Aufwärmtemperaturen hochregulieren, um den Aufwärmprozess zu beschleunigen. Während diese Vorgehensweise dazu führt, dass die Speisen zügiger bereitstehen leidet die Qualität in überproportionalem Maße. Durch eine festeingestellte Aufwärmzeit, können derartige Fehlbedienungen vermieden und eine konstant hohe Speisequalität bereitgestellt werden.

Die Festeinstellung der Aufwärmtemperatur bei der Vorrichtung kann auf verschiedene Weise vorgenommen werden.

In einer bevorzugten Ausführungsform weist die Vorrichtung zur festen Einstellung einer Aufwärmtemperatur ein Thermostat auf, mit einer festgelegten Temperatur aus einem Bereich zwischen 80°C und 90°C, besonders bevorzugt 82°C-87°C, besonders bevorzugt ungefähr 85°C. Bevorzugt lässt das Thermostat eine Stromzufuhr lediglich bei Temperaturen unterhalb der festgelegten Aufwärmtemperatur zu und unterbricht bei Temperaturen oberhalb der Aufwärmtemperatur die Stromzufuhr zu den Heizelementen, sodass die Wassertemperatur konstant im gewünschten Bereich gehalten wird.

Unter einem Thermostat wird das aus dem Stand der Technik bekannte Bauelement verstanden, welches bevorzugt einen Temperaturregler meint, der es erlaubt, mit Hilfe eines Temperaturfühlers bzw. Temperatursensors den Istwert einer Temperatur zu erfassen, mit einem vorgegebenen Sollwert zu vergleichen und über ein Stellglied einen gewünschten (vorgegebenen) Sollwert einzustellen. Ein Thermostat kann sowohl einen Temperaturregler bezeichnen, als auch nur den Temperaturfühler bzw. Temperatursensor ohne Stellglied. Im Stand der Technik sind verschiedene Varianten von Thermostaten bekannt, beispielsweise kann ein Bimetall-Temperaturschalter geeignet sein.

In einer bevorzugten Ausführungsform weist die Vorrichtung einen Temperartursensor zur Überwachung der Wassertemperatur auf, wobei dieser bevorzugt zur Festeinstellung der Aufwärmtemperatur genutzt wird.

Im Sinne der Erfindung ist ein Temperatursensor bevorzugt ein elektrisches oder elektronisches Bauelement, welches in Abhängigkeit der Temperatur am Sensor ein elektrisches oder mechanisches Signal generiert. Im Stand der Technik sind eine Vielzahl von Temperatursensoren bekannt, wie beispielsweise Halbleiter-Temperatursensoren, Widerstandstemperatursensoren, pyroelektrische Materialien, Thermoelemente oder Schwingquarze. Bevorzugt kommt ein Thermostat als Temperatursensor zur Anwendung.

Der Temperatursensor kann mit einer Steuereinheit verbunden sein, sodass diese die Messwerte der Temperatursensoren aufnehmen und auswerten kann, um eine Regulation des Heizelementes zu bewirken. Die Regulation des elektrischen Heizelementes kann bevorzugt mithilfe des Anliegens eines elektrischen Stroms oder einer Spannung erfolgen. Der Temperatursensor kann aber beispielsweise auch in Form eines Thermostats vorliegen, welche wie obig beschrieben temperaturabhängig die Stromzufuhr zulässt oder unterbricht.

Es ist besonders bevorzugt, dass der Temperatursensor die Temperatur der in dem Wassertank eingebrachten Wassermenge direkt misst, d.h. dass der Temperatursensor in Kontakt mit dem Wasser ist. Hierzu kann der Temperatursensor beispielsweise auf einer Innenfläche des Wassertanks angebracht vorliegen, in das Fassungsvolumen des Wassertanks hineinreichen oder aber in Wasserleitungen vorliegen, welche in fluider Kommunikation mit dem Wassertank stehen. Im Falle eines Thermostats wird bevorzugt ein Fühler mit dem Wasser in Kontakt gebracht, wobei das Stellglied innerhalb der Steuereinheit, bevorzugt in Form einer elektrischen Schaltung, vorliegt.

Eine Berücksichtigung der Temperatur des Wassers erlaubt eine besonders präzise Regulation des elektrischen Heizelementes, um eine optimale Temperaturverteilung innerhalb des Wassertanks und somit Wärmeübertragung auf die Verpackungseinheiten sicherzustellen.

In bevorzugten Ausführungsformen kann die Vorrichtung auch mehrere Temperatursensoren, beispielsweise zwei, drei oder mehr aufweisen, welche an unterschiedlichen Positionen innerhalb oder außerhalb des Wassertanks angebracht vorliegen. Hierbei wird die Steuereinheit bevorzugt anhand einer ggf. gewichteten Mittelung der Ergebnisse der mehreren Temperatursensoren die elektrische Stromzufuhr zu dem mindestens einen Heizelement regulieren.

Bevorzugt erfolgt mittels des mindestens einen Temperatursensors eine Festeinstellung der Aufwärmwärmzeit. Im Falle eines Thermostats ist dies zumeist hardwareimplementiert vorgegeben. Eine Festeinstellung kann jedoch auch soft- oder firmwareseitig durchgeführt werden. Im Sinne der Erfindung wird bevorzugt unter der Firmware eine Software, d.h. die Anleitung für ein computer-implementiertes Verfahren verstanden, welches in der Steuereinheit, beispielsweise in Form eines Mikroprozessor eingebettet vorliegt. D.h. die Firmware umfasst bevorzugt jene Software, welche mit der Hardware der Vorrichtung, d.h. insbesondere mit den Heizelementen, ggf. Temperatursensoren oder einer elektrischen Pumpe, funktional verbunden ist. Zur Festeinstellung der Aufwärmzeit kann beispielsweise in der Firmware eine entsprechende Aufwärmzeit vorgegeben werden. Die Änderungen einer Aufwärmzeit in der Firmware wären nur durch technisches Personal mit entsprechender Ausrüstung möglich und kann durch einen Nutzer bei der Verwendung der Vorrichtung nicht vorgenommen werden, sodass die genannten Vorteile einer gleichbleibenden Qualitätssicherung gegeben sind.

In einer weiteren bevorzugten Ausführungsform ist die Steuereinheit dafür konfiguriert, während des Aufwärmprozesses die Stromzufuhr zum elektrischen Heizelement derart zu regulieren, dass die Wassertemperatur bei einer Aufwärmtemperatur von 80°-90°C für eine vorbestimmte Aufwärmzeit gehalten wird, welche 35 min bis 55 min beträgt.

In einer besonders bevorzugten Ausführungsform ist die Steuereinheit dafür konfiguriert während des Aufwärmprozesses die Stromzufuhr zum elektrischen Heizelement derart zu regulieren, dass die Wassertemperatur bei einer Aufwärmtemperatur von 80°-90°C , bevorzugt zwischen 83°-87°C, besonders bevorzugt ungefähr 85°C für eine vorbestimmte Aufwärmzeit gehalten wird, welche von 35 min bis 55 min, bevorzugt von 42 min bis 48 min, besonders bevorzugt ungefähr 45 min beträgt.

Im Sinne der Erfindung bezeichnen Angaben wie ungefähr, ca., nahezu oder synonyme Begriffe bevorzugt eine Toleranzspanne von weniger als ± 10%, bevorzugt weniger als ± 5% besonders bevorzugt weniger als ± 1%. Vorbestimmte Aufwärmzeit meint bevorzugt, dass der Vorrichtung für den Aufwärmprozess (d.h. Regenerationsprozess) eine Aufwärmzeit vorgegeben wird, d.h. das der Aufwärmprozess nicht für eine unbestimmte Zeit erfolgt. Die vorbestimmte Aufwärmzeit kann festeingestellt, als Geräteparameter vorliegen oder für den Nutzer aus verschiedenen Aufwärmzeiten auswählbar sein.

Die Aufwärmzeit, also die Dauer der Regeneration bzw. des Aufwärmprozesses der Verpackungseinheiten, kann wie obig erläutert bevorzugt an die Größe der Verpackungseinheiten angepasst werden. So wird beispielsweise bei kleineren Fassungsvolumina für einzelne Abnehmer von 200 ml und 1 L ein kürzerer Verbleib im Wärmebad bei einer Temperatur von 80°C-90°C notwendig sein, als bei größeren Verpackungseinheiten für Gemeinschaftseinrichtung mit Fassungsvolumina zwischen 1 L und 10 L. Für besonders bevorzugte Fassungsvolumina der Verpackungseinheiten von 1 L bis 5 L, bevorzugt von 2 L bis 3 L, hat sich eine Aufwärmzeit von 35 min bis 55 min, besonders bevorzugt von 40 min bis 50 min, ganz besonders bevorzugt von ungefähr 45 min als besonders vorteilhaft erwiesen.

Falls die Vorrichtung für verschiedene Verpackungsgrößen genutzt werden soll, kann eine nutzerabhängige Einstellung der Aufwärmzeit bevorzugt sein. Denkbar ist auch, dass mittels einer Codierung der Verpackungsbeutel, beispielsweise eines QR-Codes die Vorrichtung automatisch die geeignete Aufwärmzeit auslesen kann. Zu diesem Zweck weist die Vorrichtung in bevorzugten Ausführungsformen entsprechende Sensoren und Auswerteeinheiten auf.

In einer bevorzugten Ausführungsform ist die Aufwärmzeit mittels eines Zeitrelais festeingestellt. Als Zeitrelais wird bevorzugt eine Kombination aus einem Relais und einem Zeitglied bezeichnet, mit dessen Hilfe in der Steuerungs- und Automatisierungstechnik Ein- oder Ausschaltverzögerungen erreicht werden können. Dem Fachmann sind hierfür verschiedene Ausführungsformen bekannt. Beispielsweise kann ein elektronisches Zeitrelais zum Einsatz kommen, wobei z.B. eine digitale Schaltung mit Oszillator, Frequenzteiler, Zähler und/oder Komparator, u.a. als Multifunktionsrelais mit Mikrocontroller eingesetzt werden kann.

Im Hinblick auf eine Ausrichtung und Optimierung der Prozessschritte bei der Gemeinschaftsverpflegung ist es besonders bevorzugt die Aufwärmzeit gerätinhärent festzulegen, beispielsweise mittels eines Zeitrelais, welches in einer elektronischen Schaltung als Steuereinheit vorliegt, sodass die Vorrichtung für eine bevorzugt Größe der Verpackungseinheiten oder eine bevorzugte Spanne von Größen von Verpackungseinheiten ausgelegt ist.

Es können aber beispielsweise auch unterschiedliche Vorrichtungen für unterschiedliche Anwendungen und Größen von Verpackungseinheiten vorgesehen sein. Beispielsweise kann es bevorzugt sein für Anwendungen in Gemeinschaftseinrichtungen, wie Kindergärten oder Schulen, eine Vorrichtung mit festeingestellter Aufwärmzeit von 35 min bis 55 min bereitzustellen, während für Anwendungen von Einzelabnehmern beispielsweise zur Regeneration der Speisekomponenten in einem Haussetting (z.B. bei sogenannten Essen auf Rädern Auslieferungen) festeingestellte Aufwärmzeit von lediglich 15 min bis 30 min für Fassungsvolumina von 200 ml bis 1 L bevorzugt sein können.

In einer bevorzugten Ausführungsform sind die Fächer des Tauchkorbes Gitterfächer, wobei der Tauchkorb zwischen 2 und 10, bevorzugt zwischen 4 und 8 Fächer aufweist.

Besonders bevorzugt sind die Gitterfächer flach, wobei das Verhältnis der Höhe der Gitterfächer zu deren Länge oder Breite 1:2, 1:3, 1:4, 1:5, 1:10 oder mehr beträgt. Hierdurch lassen sich besonders bevorzugt flache Verpackungseinheiten, wie obig beschrieben einschichten. Aufgrund ihrer flachen Dimensionierung weisen derartige Verpackungseinheiten eine besonders hohe Oberfläche auf, sodass die Regeneration besonders zügig, aber gleichzeitig qualitätsschonend erfolgen kann.

Bei der flachen Dimensionierung der Fächer lassen sich die Verpackungseinheiten waagerecht flachliegend übereinander anordnen.

Zum einen erleichtert die Anordnung das Einschichten der Verpackungseinheiten und das Einbringen des Tauchkorbes in den Wassertank. Zum anderen wird durch die waagerechte Lagerung der Verpackungseinheiten im Tauchkorb selbst eine Verteilung der Speiskomponente über die maximale Oberfläche der Verpackungseinheiten gewährleistet. Durch die waagerechte Lagerung stellen die bevorzugten Verpackungseinheiten die maximale Oberfläche für die Speisekomponenten bereit. So kann das Wärme-Übertragungsmedium Wasser seinen maximalen Wirkungsgrad auf die Speisekomponenten übertragen. Gerade bei flüssigen und halbflüssigen Konsistenten der Speisekomponenten wirkt sich die Anordnung überraschend positiv auf die Regenerierzeit und Qualität aus.

In einer bevorzugten Ausführungsform weist der Wassertank eine Breite von 30 bis 40 cm, eine Tiefe von 20 bis 30 cm und eine Höhe von 45 bis 60 cm auf. Diese Abmaße haben sich als besonders vorteilhaft für die Erwärmung von den bevorzugten Verpackungseinheiten mit Fassungsvolumina von 200 ml bis 10 Liter, bevorzugt zwischen 1 Liter und 5 Liter, besonders bevorzugt zwischen 2 Liter und 3 Liter erwiesen.

Insbesondere in Kombination mit einem Tauchkorb der bevorzugten Konfiguration können so zuverlässig ausgezeichnete Regenerationsergebnisse erzielt werden.

In einer bevorzugten Ausführungsform weist der Wassertank ein Fassungsvolumen von 10 bis 100 L, bevorzugt von 20 bis 80L, 30 bis 70 L, 40 bis 50L auf. Die genannten besonders vorteilhaft für die Erwärmung von den bevorzugten Verpackungseinheiten mit Fassungsvolumina von 200 ml bis 10 Liter, bevorzugt zwischen 1 Liter und 5 Liter, besonders bevorzugt zwischen 2 Liter und 3 Liter erwiesen. Insbesondere wenn vier oder mehr, bevorzugt sechs oder mehr Verpackungseinheiten gleichzeitig regeneriert werden soll. Bei Verwendung beispielsweise von 6 Verpackungseinheiten zu je 3 L und Befüllung des Wassertanks mit 17 L Wasser. Ist unter Berücksichtigung des Verdrängungsvolumens des Tauchkorbes in einem besonders bevorzugten Wassertank mit Fassungsvolumen von ca. 45 L der Wassertank nahezu vollständig gefüllt.

Die bevorzugt genannten Abmaße und Fassungsvolumina des Wassertanks sind somit auf besonders bevorzugte Größen und Anzahl von Verpackungseinheiten abgestimmt, wobei sich ein Verhältnis zwischen 1:3 und 3:1, bevorzugt zwischen 1:2 und 2:1 aus Volumen der Verpackungseinheit zum Volumen des Wärmeübertragungsmedium Wasser aus überraschend energieeffektiv erwiesen hat.

In einer bevorzugten Ausführungsform weist die Vorrichtung zwei Heizelemente auf, welche in Verkleidungsrohren bevorzugt aus Edelstahl eingefasst sind und im unteren Fünftel des Wassertanks oberhalb des Bodens des Wassertanks horizontal ausgerichtet vorliegen. Die Bezeichnung unteres Fünftel bezieht sich auf die Höhe des Wassertanks und horizontal meint bevorzugt parallel zum Boden des Wassertank und senkrecht zu den Mantel- bzw. Seitenflächen. Bevorzugt liegen zudem oberhalb der beiden Heizelemente ein oder mehrere Ablageschienen, ebenfalls bevorzugt horizontal ausgerichtet, zur Aufnahme des Tauchkorbes installiert vor.

Die Positionierung zweier Heizelemente unterhalb des Tauchkorbes führt zu einer besonders effektiven Erwärmung des Wassers im Wassertank. So treten bei der Positionierung Konvektionsströme auf, welche ohne zusätzliche Energiezufuhr eine optimale Umspülung der Verpackungseinheiten, während des Aufwärmprozesses gewährleisten. Sowohl in Bezug auf die Energieeffizienz, als auch auf das Regenerationsergebnis, stellt diese Ausführungsform mithin eine besonders vorteilhafte Konfiguration dar.

In einer weiteren bevorzugten Ausführungsform weist der Wassertank im Boden eine Auslassöffnung auf und in einem oberen Drittel eine Einlassöffnung auf, welche über eine Wasserleitung und eine Pumpe miteinander verbunden sind, wobei die Pumpe dafür konfiguriert ist, Wasser aus der Auslassöffnung im Boden des Wassertanks abzusaugen und in die Einlassöffnung im oberen Drittel des Wassertanks einzuspeisen.

Die Angabe des oberen Drittel bezieht sich bevorzugt auf die Höhe des Wassertanks, wobei oben und unten die Richtung der Schwerkraft kennzeichnen im Falle einer aufrecht stehenden und zur Anwendung bereiten Vorrichtung. Wasserleitungen sind bevorzugt Rohre. Eine derartige Konfiguration sorgt auf kompakte Weise dafür, dass das Wasser als Übertragungsmedium während der Erhitzung ständig an den Heizelementen vorbeigeführt wird. Hierdurch lässt sich ein besonders zügiges Vorheizen realisieren. Während der Aufwärmphase sorgt die Pumpe zudem dafür, dass eine Temperatur im bevorzugten Bereich von 80°C bis 90°C besonders stabil gehalten werden kann.

In einer weiteren bevorzugten Ausführungsform weist der Wassertank im Boden eine Auslassöffnung und das Gehäuse eine Ablassöffnung auf, welche über eine Wasserleitung und eine Pumpe miteinander verbunden oder in einer Ventilstellung verbindbar sind, wobei die Pumpe dafür konfiguriert ist, das Wasser aus der Auslassöffnung im Boden des Wassertanks abzusaugen und über die Ablassöffnung abzuführen. Vorteilhafterweise kann die Pumpe nicht nur für ein Umwälzen und mithin effektives und kontrolliertes Erhitzen des Wasserbades genutzt werden, sondern auch um nach dem Betrieb das Wasser aus dem Wassertank schnell und sicher abzuführen. Ein gefährliches und mühsames Ausleeren des Containers per Hand ist nicht notwendig. Stattdessen kann das Ablassen mittels einfacher Betätigung automatisiert veranlasst werden.

Besonders bevorzugt ist es, dass die Wasserverbindung mittels eines Ventils zwischen zwei Einstellungen gewechselt werden kann. Während in einer ersten Einstellung zum Umwälzen Wasser von einer Ablassöffnung im Boden des Wassertanks zu einer Einlassöffnung im oberen Ende des Wassertanks befördert wird, liegt in einer zweiten Einstellung zum Abpumpen eine Verbindung zwischen einer unteren Auslassöffnung im Boden des Wassertanks mit einer Ablassöffnung in dem Gehäuse vor. Diese Ausführungsform ist platzsparend und überraschend robust.

In einer bevorzugten Ausführungsform weist die Vorrichtung Verriegelungsmittel für den Deckel auf, wobei die Steuereinheit konfiguriert ist, während des Aufwärmprozesses bevorzugt für die vorbestimmte Aufwärmzeit, den Deckel zu verriegeln. Die Verriegelung dient einerseits einer sicheren Bedienung der Vorrichtung, welche ausschließt, dass unbefugte Personen während des Aufwärmprozesses sich an dem heißen Wasser verbrühen. Zum anderen stellt der Verriegelungsmechanismus sicher, dass die Regeneration der Verpackungseinheiten über die vorgesehene Zeit erfolgt und nicht vorzeitig beendet wird.

Als Verriegelungsmittel können verschiedene aus dem Stand der Technik bekannte Bauelemente zum Einsatz kommen, beispielsweise kann ein Riegel- oder Schließmechanismus verwandt werden, welche mittels der Steuereinheit zwischen einer Verriegelungs- und einer Entriegelungsposition verschiebbar sind.

Die Ausführungsform gewährleistet, insbesondere im Zusammenhang einer Aufwärmtemperatur, welche auf der Steuereinheit festgelegt ist, eine besonders robuste Bedienung des Gerätes, welche unabhängig vom Erfahrungsgrad des Nutzers zuverlässig beste Regenerationsergebnisse liefert.

Erfahrungsgemäß führt insbesondere in Gemeinschaftseinrichtung ein Zeitdruck nicht selten dazu, dass Mitarbeiter bei den im Stand der Technik bekannten Heißlüftern die vorgesehenen Temperaturen hochregulieren, um den Aufwärmprozess zu beschleunigen, wodurch jedoch die Qualität leidet.

Durch Bereitstellung einer Vorrichtung, welche keine manuelle Einstellbarkeit der Aufwärmtemperatur vorsieht, werden Fehlbedienungen bereits geräteinhärent ausgeschlossen. Eine derartige Vorrichtung stellt somit weitestgehend nutzerunabhängig, flächendeckend einen hohen qualitativen Standard sicher.

Um die Bedienerfreundlichkeit ist zu erhöhen, ist es zudem bevorzugt vorgesehen ein schlankes und intuitives Bedienkonzept bereitzustellen.

In einer besonders bevorzugten Ausführungsform ist die Vorrichtung mit lediglich einem Hauptschalter für die Inbetriebnahme (AN/AUS), optional einer Schaltposition für ein Abpumpen, sowie einem Taster zum Starten des Aufwärmprogrammes und einer oder zwei Kontrollleuchten ausgestattet.

Bevorzugt bewirkt das Anschalten mittels des Hauptschalters ein Vorheizen des Wasserbads auf eine Betriebstemperatur beispielsweise von 72°C oder mehr. Eine Kontrollleuchte, kann die erreichte Prozesstemperatur anzeigen. Nach dem Einschichten der Verpackungseinheiten in den Tauchkorb, dessen Einbringung in den Wassertank und Schließung des Deckels kann mittels des Tasters das Aufwärmprogramm gestartet werden. Wie obig beschrieben sorgt die Steuereinheit während des eigentlichen Aufwärm- bzw. Regenerationsprogrammes für eine Wassertemperatur von 80°-90°C, um die Verpackungseinheiten zur gewünschten Kerntemperatur von mindestens 72°C zu führen. Nach Beendigung des Aufwärmprozesses, bevorzugt nach 35 min bis 55 min, kann eine zweite Kontrollleuchte die Beendigung des Prozesses anzeigen. Bevorzugt hält ein von der Steuereinheit regulierter Verriegelungsmechanismus während des gesamten Regenerationsprogrames den Deckel geschlossen. Bei Prozessbeendigung und Anzeige der entsprechenden Kontrolllampe, wird die Entriegelung aufgehoben, sodass die Verpackungseinheiten entnommen werden können.

Die offenbarten bevorzugten Ausführungsformen der Erfindung stellen die Lehre gemäß der Erfindung beispielhaft dar. Der durchschnittliche Fachmann erkennt, wo und in welchem Umfang er bestimmte technische Merkmale variieren oder sie durch äquivalente Merkmale ersetzen kann. Die erfindungsgemäße Lehre stellt eine Kombinationserfindung dar, bei der zunächst bestimmte Bereiche und technische Merkmale ausgewählt werden. Diese ausgewählten Merkmale werden so miteinander kombiniert, dass ein überraschendes Ergebnis erzielt werden kann. Dieses überraschende Ergebnis besteht insbesondere in bereitgestellten Nahrungsmitteln, die einen überraschend hohen Vitaminanteil oder aber einen überraschend hohen Anteil an gesunden ungesättigten Fettsäuren aufweisen und weiterhin eine überraschend geringe mikrobiologische Belastung zeigen.

Weiterhin war es völlig überraschend, dass die sog. Kantinen- oder Gemeinschaftsnahrung bzw. Gemeinschaftsverpflegung als Warmverpflegung in einer Art und Weise bereitgestellt werden kann, wie man sie im Stand der Technik in der Regel sonst nur von einer individuellen Zubereitung kennt. Es war beispielsweise völlig überraschend, dass das bekannte Abkühlen durch ein Kaltluftverfahren ähnliche Effekte auf die Nahrung wie das Gefriertrocknen hat, wodurch zahlreiche Mikronährstoffe und Vitamine in der Nahrung nachteilig beeinflusst werden. Es ist das Verdienst der Erfinder, ein Verfahren und eine Vorrichtung zur Generierung von Gemeinschaftsverpflegung bereitgestellt zu haben, die sich als Warmverpflegung durch einen überraschend hohen Anteil an sekundären Pflanzenstoffen (bei Gemüse- und Obstkomponenten), an Mineralien, an zahlreichen Mikronährstoffen, an optimalen Ballaststoffen, an einer guten Zusammensetzung von Proteinen und Aminosäuren sowie gesunden Fettsäuen auszeichnet.

Im Folgenden wird die Erfindung anhand weiterer Figuren und Beispiele beschrieben, ohne auf diese beschränkt zu sein.

### Kurzbeschreibung der Abbildungen

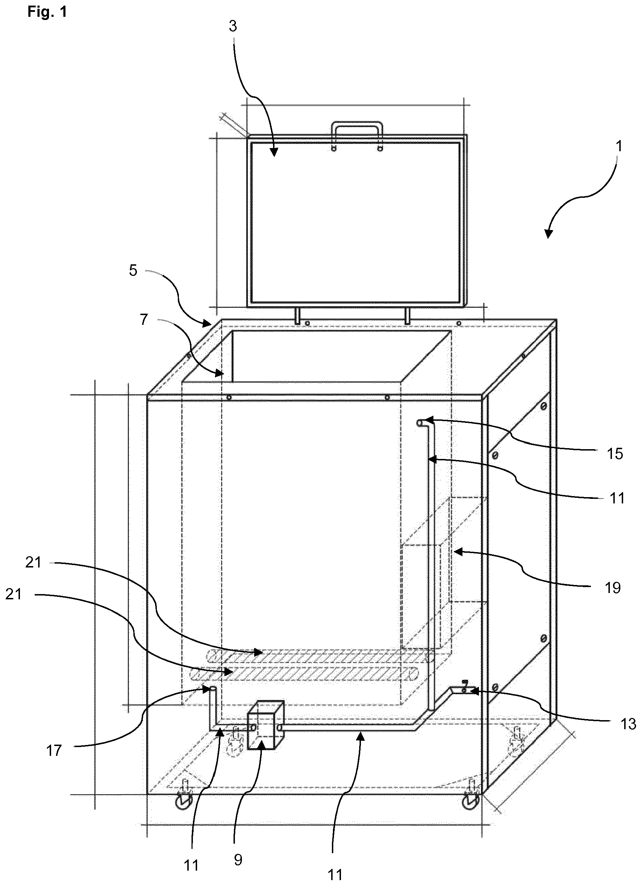

- Fig. 1: Schematische Darstellung einer bevorzugten Ausführungsform einer Vorrichtung zur Erwärmung der Verpackungseinheiten

### Detaillierte Beschreibung der Abbildungen

Figur 1 zeigt die schematische Ansicht einer bevorzugten Ausführungsform einer Vorrichtung 1 zur Erwärmung der Verpackungseinheiten, umfassend ein Gehäuse 5, einen Wassertank 7 zur Aufnahme von Wasser sowie einen Deckel 3 zum Verschließen des Wassertanks, ein Tauchkorb (nicht gezeigt) mit Fächern für Verpackungseinheiten von gekühlt konservierten Lebensmitteln zur Einbringung in den Wassertank 7, mindestens ein elektrisches Heizelement 21 zur Erhitzung des Wassers, eine Pumpe 9 zum Umwälzen des Wassers, eine Steuereinheit 19, wobei die Steuereinheit 19 konfiguriert ist während eines Aufwärmprozesses die Stromzufuhr zum elektrischen Heizelement 21 derart zu regulieren, dass die Wassertemperatur bei einer Aufwärmtemperatur von 80°-90°C für eine vorbestimmte Aufwärmzeit gehalten wird.

Die Vorrichtung 1 weist ein Gehäuse 5 in Form einer Ummantelung (bevorzugte Breite = 55,5 cm, Tiefe 36,0 cm, Höhe = 72,5 cm) aus Edelstahlblech (bevorzugte Stärke 2 mm) auf. Im oberen Teil des Gehäuses 5 kann ein gepresste Halterblech bzw. Überlappungsblech zum Wassertank 7 vorliegen, welches den Zusammenhalt des Gerätes befördert und in Verbindung mit zwei Dichtungen (jeweils eine zum Gerätegehäuse und zum Wassertank) die elektrischen Komponenten vor Wasserschäden schützt.

Im Kern der Vorrichtung 1 befindet sich ein rechteckiger Wassertank 7 (bevorzugte Abmaße: Breite = 34,0 cm, Tiefe 25,0 cm, Höhe = 52,0 cm) aus Edelstahlblech (bevorzugte Stärke: 2 mm dick). Der Wassertank 7 ist mit zwei elektrischen Heizelementen 21 (bevorzugt: Elektroheizungen 1700W, 230V) ausgestattet. Diese befinden sich im Wassertank 7, kurz über dem Boden des Wassertanks 7, bevorzugt im unteren Fünftel oberhalb des Bodens des Wassertanks 7 und sind horizontal, d.h. parallel zum Boden des Wassertanks 7, ausgerichtet. Die Heizelemente 21 sind in als Verkleidungsrohren bevorzugt in eingeschweißten Edelstahlrohren eingefasst und hierdurch vom Wasser isoliert.

Die Heizelemente 21 dienen der Erwärmung des Wassers. Die Wassertemperatur wird mit Hilfe eines Temperatursensors in bevorzugter Form eines Thermostats (bevorzugt 4-Polig, bspw. auf 85°C fest eingestellt, Fühler im Wasserstrom) überwacht und geregelt. Oberhalb der elektrischen Heizelemente 21 befinden sich bevorzugt eingeschweißte Ablageschienen zur Aufnahme des Tauchkorbes (nicht gezeigt). Durch eine Pumpe 9, die das Wasser über ein Auslassöffnung 17 im Bodenbereich des Wassertanks 7 absaugt und über Wasserleitungen 11 in eine Einlassöffnung 15 im oberen Drittel des Wassertanks im seitlichen Bereich wieder einspült, wird das Wärme-Übertragungsmedium Wasser in Bewegung gehalten, damit die eingesetzte Energie in der kürzesten Zeit seinen maximalen Wirkungsgrad erzielt. Ein Ablassen des Wassers kann ebenfalls mittels der Pumpe über eine Ablassöffnung 13 erfolgen. Hierzu kann die Vorrichtung die Verstellung eines Ventils vorsehen.

Der Wassertank 7 ist mit einem Deckel 3 (bevorzugte Abmaße: Breite = 36,5 cm, Tiefe 27,0 cm, Höhe 52 cm) aus doppelwandigem, wärmeisoliertem Edelstahlblech (2 cm dick) versehen und dichtet mittels einer umlaufenden Dichtung zum Wassertank 7 fest ab.

Der Deckel 3 ist mit zwei Scharnieren an der oberen Abdeckung befestigt und kann mit dem wärmeisolierten Griff, bis zu einem Winkel von ca. 135° geöffnet werden, wodurch eine leichte Handhabung gewährleistet wird.

Die Steuereinheit 19 der Vorrichtung befindet sich bevorzugt in einem Installationskasten mit einem Leistungsschütz für die elektrischen Heizelemente 21, einem Zeitrelais (mit fest eingestellter Prozesszeit: bevorzugt 45 min), drei Hilfsschützen, einer 16 A Sicherungsautomatik vier Feinsicherungshalter mit Feinsicherungen für die Pumpe 9, diverse Anschlussklemmen und Kabeln.

Im Rohr- bzw. Wasserleitungssystem 11 liegt bevorzugt ein Thermostat (bevorzugt fest eingestellt auf 85°C) zur Temperatursteuerung eingebunden vor.

Ein speziell für die Vorrichtung 1 entwickelter Tauchkorb (nicht gezeigt) verfügt bevorzugt über vier, besonders bevorzugt über sechs oder mehr Fächer für je eine Verpackungseinheit. Die Fächer des Tauchkorbes sind bevorzugt so konzipiert, dass jeder der vier, bevorzugt sechs oder Verpackungseinheiten waagerecht und flachliegend übereinander angeordnet darin Platz findet. Dementsprechend kann der Tauchkorb mit entsprechend der Anzahl der Fächer vier, sechs oder mehr Verpackungseinheiten bestückt werden und in den Wassertank 3 zur Regeneration eingebracht werden.

Ein beispielhaftes Regenerationsverfahren ist im Folgenden dargestellt:
Am Tag der Regenerierung einzelner Speisekomponenten werden die Verpackungseinheiten in der Vorrichtung 1 auf eine gewünschte Temperatur, bevorzugt von mind. 72°C erhitzt.

Die bevorzugte Regeneration der Verpackungseinheiten erfolgt in den nachstehenden Prozessschritten.
1. Einfüllen von 17 Liter warmen Leitungswasser in den Wassertank 7
2. Vorheizen des Wassers im Wassertank 7 für ca. 45 Minuten bis eine grüne LED Kontrolllampe erleuchtet
3. Befüllen des Tauchkorbes mit den Verpackungseinheiten
4. Bestücken der Vorrichtung 1 mit dem befüllten Tauchkorb
5. Schließen des Deckels 3
6. Starten des Aufwärmprogramm (ca. 40 -45 min) mittels eines Tasters
7. Öffnen des Deckel 3 und Entnahme des Tauchkorbes
8. Füllen der Speiskomponenten in einen Gastronomie (GN) Behälter

Eine beispielhafte Außerbetriebnahme der Vorrichtung ist im Folgenden dargestellt:
1. Den an der Ablassöffnung 13 angebrachten Ablaufschlauch in ein Waschbecken einhängen oder auf einen Fußbodenablauf legen
2. Kugelhahn an der Ablassöffnungen 13 öffnen
3. Hauptschalter auf ABPUMPEN stellen
4. Ist das Wasser abgelaufen, Hauptschalter auf AUS stellen
5. Kugelhahn schließen, Schlauch am Haken an der Rückseite des Gerätes verstauen
6. Netzstecker ziehen, Sichtkontrolle, verstauen
7. Wassertank 7 und Gehäuse 5 reinigen
8. Deckel 3 zum Austrocknen offen lassen

Es wird darauf hingewiesen, dass verschiedene Alternativen zu den beschriebenen Ausführungsformen der Erfindung verwendet werden können, um die Erfindung auszuführen und zu der erfindungsgemäßen Lösung zu gelangen. Das erfindungsgemäße Verfahren beschränkt sich in den Ausführungen somit nicht auf die vorstehenden bevorzugten Ausführungsformen. Vielmehr ist eine Vielzahl von Ausgestaltungsvarianten denkbar, welche von der dargestellten Lösung abweichen können. Ziel der Ansprüche ist es, den Schutzumfang der Erfindung zu definieren. Der Schutzumfang der Ansprüche ist darauf gerichtet, das erfindungsgemäße Verfahren sowie äquivalente Ausführungsformen von diesem abzudecken.

### BEZUGSZEICHEN

- 1: Vorrichtung zum Erwärmen von Verpackungseinheiten
- 3: Deckel
- 5: Gehäuse
- 7: Wassertank
- 9: Pumpe
- 11: Wasserleitungen
- 13: Ablassöffnung
- 15: Einlassöffnung
- 17: Auslassöffnung
- 19: Steuereinheit
- 21: elektrische Heizelemente

## Patentansprüche

1. Verfahren zur Konservierung einer warmzubereiteten Speisekomponente umfassend die folgenden Schritte
a. Warme Zubereitung einer Menge der Speisekomponente für eine Vielzahl von Verzehrportionen, wobei die warme Zubereitung ein Erhitzen der Speisekomponente bis zum Garzeitpunkt umfasst und in einem offenen Kochbehälter erfolgt
b. Abfüllen der warmzubereiteten Speisekomponente bei einer Temperatur von mindestens 75°C in eine Vielzahl von Verpackungseinheiten und anschließende Versiegelung der Verpackungseinheiten
c. Kühlung der Verpackungseinheiten von einer Kerntemperatur von mindestens 65°C auf eine Kerntemperatur von weniger als 3°C innerhalb von 90 min oder weniger
**dadurch gekennzeichnet, dass**
das Abfüllen gemäß Schritt b) des Verfahrens mit Hilfe eines Tiefziehautomaten erfolgt, welcher folgende Schritte ausführt
i. Prägung von Verpackungseinheiten in Schalenform
ii. Abfüllung der Speisekomponenten bei einer Temperatur von mindestens 75°C in die Verpackungseinheiten
iii. Dampfspülung der Verpackungseinheiten mit Wasserdampf einer Temperatur von 100°C oder mehr,
iv. Verschweißen der Verpackungseinheiten,
und wobei die Kühlung der Verpackungseinheiten im Schritt c) in einem Wasserbad erfolgt, dessen Temperatur 3°C oder weniger beträgt.

2. Verfahren gemäß dem vorherigen Anspruch
**dadurch gekennzeichnet, dass**
mindestens zwei oder mehr, bevorzugt drei oder mehr Speisekomponenten eines Speisemenüs zubereitet, abgefüllt und gekühlt werden.

3. Verfahren gemäß einem der vorherigen Ansprüche
**dadurch gekennzeichnet, dass**
die warme Zubereitung in einem offenen Kochbehälter, welcher ein Kochtopf, eine Kochschale, eine Pfanne oder ein Ofen ist, erfolgt.

4. Verfahren gemäß einem der vorherigen Ansprüche
**dadurch gekennzeichnet, dass**
die Menge einer zubereiteten Speisekomponente ein Gewicht von als 5 kg, bevorzugt mehr 10 kg besonders bevorzugt mehr als 20 kg aufweist, sodass die Menge bevorzugt für eine Anzahl von mehr als 10, bevorzugt mehr als 50, besonders bevorzugt mehr als 100 Verzehrportionen geeignet ist.

5. Verfahren gemäß einem der vorherigen Ansprüche
**dadurch gekennzeichnet, dass**
die Verpackungseinheiten ein Fassungsvolumen zwischen 200 ml und 10 Liter, bevorzugt zwischen 1 Liter und 5 Liter, besonders bevorzugt zwischen 2 Liter und 3 Liter aufweisen.

6. Verfahren gemäß einem der vorherigen Ansprüche
**dadurch gekennzeichnet, dass**
das Wasserbad für die Kühlung die Verpackungseinheiten mit einem oder mehreren Tauchkörben mit Fächern für die Verpackungseinheiten bestückt ist und ein Durchlaufkühler mit dem Wasserbad verbunden ist, um eine Temperatur von 3°C oder weniger während der Kühlung zu gewährleisten.

7. Verfahren gemäß einem der vorherigen Ansprüche
**dadurch gekennzeichnet, dass**
das Abfüllen gemäß Schritt b) des Verfahrens mit Hilfe eines Tiefziehautomaten erfolgt, welcher folgende Schritte ausführt
i. Prägung von Verpackungseinheiten in Schalenform aus einer Transponderfolie
ii. Abfüllung der Speisekomponenten bei einer Temperatur von mindestens 75°C in die Verpackungseinheiten
iii. Dampfspülung der Verpackungseinheiten mit Wasserdampf einer Temperatur von 120°C, 130°C oder mehr
iv. Verschweißen der Verpackungseinheiten mittels einer Oberfolie

8. Verfahren zur Konservierung einer warmzubereiteten und in einer Vielzahl von Verpackungseinheiten abgefüllten Speisekomponente sowie Lagerung und Erwärmung der Verpackungseinheiten zum Verzehr, umfassend folgende Schritte
I. Konservierung einer warmzubereiteten und in einer Vielzahl von Verpackungseinheiten abgefüllten Speisekomponente mittels eines Verfahrens gemäß einem der Ansprüche 1-7
II. Lagerung der Verpackungseinheiten bei einer Kerntemperatur von 8°C oder weniger
III. Erwärmung der Verpackungseinheiten, bevorzugt am gewünschten Ort des Verzehrs, von einer Kerntemperatur von weniger als 8°C, auf eine Kerntemperatur von mehr als 65°C , bevorzugt auf eine Kerntemperatur zwischen 70°C und 74°C in einem Wasserbad bei einer Temperatur zwischen 80°C und 90°C.

9. Verfahren gemäß Anspruch 8
**dadurch gekennzeichnet, dass**
die Erwärmung der Verpackungseinheiten in einem Zeitraum von 35 min bis 55 min erfolgt.

10. Verfahren gemäß Anspruch 8 oder 9,
**dadurch gekennzeichnet, dass** für die Erwärmung der Verpackungseinheiten eine Vorrichtung verwandt wird, umfassend
- ein Gehäuse (5)
- einen Wassertank (7) zur Aufnahme von Wasser sowie einen Deckel (3) zum Verschließen des Wassertanks (7)
- ein Tauchkorb mit Fächern für Verpackungseinheiten von gekühlt konservierten Lebensmitteln zur Einbringung in den Wassertank (7)
- mindestens ein elektrisches Heizelement (21) zur Erhitzung des Wassers
- eine Pumpe (9) zum Umwälzen des Wassers
- eine Steuereinheit (19),
wobei die Steuereinheit (19) konfiguriert ist während eines Aufwärmprozesses die Stromzufuhr zum elektrischen Heizelement (21) derart zu regulieren, dass die Wassertemperatur bei einer Aufwärmtemperatur von 80°-90°C für eine vorbestimmte Aufwärmzeit gehalten wird.

11. Verfahren gemäß Anspruch 10
**dadurch gekennzeichnet, dass**
die Aufwärmtemperatur für die Vorrichtung (1) festeingestellt ist und die Vorrichtung (1) keine Möglichkeit einer Änderung oder Auswahl der Aufwärmtemperatur durch einen Nutzer vorsieht und/oder
die Vorrichtung (1) zur festen Einstellung einer Aufwärmtemperatur ein Thermostat aufweist, mit einer festgelegten Temperatur aus einem Bereich zwischen 80°C und 90°C, besonders bevorzugt 82°C - 87°C, besonders bevorzugt ungefähr 85°C.

12. Verfahren gemäß einem der vorherigen Ansprüche 10 oder 11
**dadurch gekennzeichnet, dass**
die Vorrichtung einen Temperartursensor zur Überwachung der Wassertemperatur aufweist und/oder
die Aufwärmzeit 35 min bis 55 min beträgt und/oder mittels eines Zeitrelais festeingestellt ist.

13. Verfahren gemäß einem der vorherigen Ansprüche 10-12
**dadurch gekennzeichnet, dass**
die Fächer des Tauchkorbes Gitterfächer sind und der Tauchkorb zwischen 2 und 10, bevorzugt zwischen 4 und 8 Fächer aufweist und/oder
der Wassertank (7) eine Breite von 30 bis 40 cm, eine Tiefe von 20 bis 30 cm und eine Höhe von 45 bis 60 cm aufweist.

14. Verfahren gemäß einem der vorherigen Ansprüche 10-13
**dadurch gekennzeichnet, dass**
die Vorrichtung (1) zwei Heizelemente (21) umfasst, welche in Verkleidungsrohren bevorzugt aus Edelstahl eingefasst sind und im unteren Fünftel des Wassertanks (7) oberhalb des Bodens des Wassertanks (7) horizontal ausgerichtet vorliegen, wobei oberhalb der beiden Heizelemente (21) ein oder mehrere Ablageschienen zur Aufnahme des Tauchkorbes installiert sind.

15. Verfahren gemäß einem der vorherigen Ansprüche 10-14
**dadurch gekennzeichnet, dass**
der Wassertank (7) im Boden eine Auslassöffnung (17) aufweist und in einem oberen Drittel eine Einlassöffnung (15) aufweist, welche über eine Wasserleitung (11) und die Pumpe (9) miteinander verbunden sind, wobei die Pumpe (9) dafür konfiguriert ist das Wasser aus der Auslassöffnung (17) im Boden des Wassertanks (7) abzusaugen und in die Einlassöffnung (15) im oberen Drittel des Wassertanks (7) einzuspeisen und/oder
der Wassertank (7) im Boden eine Auslassöffnung (17) aufweist und das Gehäuse (5) eine Ablassöffnung (13) aufweist, welche über eine Wasserleitung (11) und die Pumpe (9) miteinander verbunden oder in einer Ventilstellung verbindbar sind, wobei die Pumpe dafür konfiguriert ist das Wasser aus der Auslassöffnung (17) im Boden des Wassertanks (7) abzusaugen und über die Ablassöffnung (13) abzuführen.

## Claims

1. A method for preserving a hot prepared food component comprising the following steps
a. hot preparation of a quantity of the food component for a plurality of consumption portions, wherein the hot preparation comprises heating the food component to the point of cooking and takes place in an open cooking container,
b. filling of the hot-prepared food component at a temperature of at least 75°C into a plurality of packaging units and subsequent sealing of the packaging units,
c. cooling the packaging units from a core temperature of at least 65°C to a core temperature of less than 3°C within 90 min or less,
**characterized in that**
the filling according to step b) of the method is carried out with the aid of an automatic thermoforming machine which carries out the following steps
i. embossing of packaging units in tray form,
ii. filling of the food components at a temperature of at least 75°C into the packaging units,
iii. steam rinsing of the packaging units with steam of a temperature of 100°C or more,
iv. sealing of the packaging units,
and wherein the cooling of the packaging units in step c) takes place in a water bath, the temperature of which is 3°C or less.

2. The method according to the preceding claim
**characterized in that**
at least two or more, preferably three or more food components of a food menu are prepared, filled, and cooled.

3. The method according to any of the preceding claims
**characterized in that**
the hot preparation takes place in an open cooking container, which is a cooking pot, a cooking tray, a pan or an oven.

4. The method according to any of the preceding claims
**characterized in that**
the amount of a prepared food component comprises a weight of more than 5 kg, preferably more than 10 kg, particularly preferred more than 20 kg, so that the amount is preferably suitable for a number of more than 10, preferably more than 50, particularly preferred more than 100 consumer portions.

5. The method according to any of the preceding claims
**characterized in that**
the packaging units have a capacity of between 200 ml and 10 liters, preferably between 1 liter and 5 liters, particularly preferred between 2 liters and 3 liters.

6. The method according to any of the preceding claims
**characterized in that**
the water bath for cooling the packaging units is equipped with one or more immersion baskets with compartments for the packaging units and a circulating cooler is connected to the water bath to ensure a temperature of 3°C or less during cooling.

7. The method according to any of the preceding claims
**characterized in that**
the filling according to step b) of the method is carried out with the aid of an automatic thermoforming machine which carries out the following steps
i. embossing of packaging units in tray form from a transponder foil,
ii. filling of the food components at a temperature of at least 75°C into the packaging units,
iii. steam rinsing of the packaging units with steam of a temperature of 120°C, 130°C or more,
iv. sealing of the packaging units by means of a top foil.

8. The method for preserving a hot prepared food component, filled into a plurality of packaging units as well as storage and reheating of the packaging units for consumption comprising the following steps
I. conservation of a hot prepared food component, filled into a plurality of packaging units using a method according to one of claims 1-7
II. storage of the packaging units at a core temperature of 8°C or less,
III. reheating the packaging units, preferably at the desired location of consumption, from a core temperature of less than 8°C, to a core temperature of more than 65°C, preferably to a core temperature between 70°C and 74°C in a water bath at a temperature between 80°C and 90°C.

9. The method according to claim 8
**characterized in that**
the heating of the packaging units takes place in a period of 35 min to 55 min.

10. The method according to claim 8 or 9
**characterized in that** a device is used for heating the packaging units, comprising
- a housing (5),
- a water tank (7) for holding water and a lid (3) for closing the water tank (7),
- an immersion basket with compartments for packaging units of refrigerated preserved food components to be placed in the water tank (7),
- at least one electric heating element (21) for heating the water,
- a pump (9) for circulating the water,
- a control unit (19),
wherein the control unit (19) is configured to regulate the power supply to the electric heating element (21) during a reheating process such that the water temperature is maintained at a reheating temperature of 80°-90°C for a predetermined reheating time.

11. The method according to the claim 10
**characterized in that**
the reheating temperature for the device (1) is fixed and the device (1) does not provide for a possibility of changing or selecting the reheating temperature by a user and/or
the device (1) comprises a thermostat for a fixed setting of the reheating temperature, with a fixed temperature from a range between 80°C and 90°C, particularly preferred 82°C - 87°C, most preferably about 85°C.

12. The method according to one of the previous claims 10-11 **characterized in that**
the device comprises a temperature sensor for monitoring the water temperature and/or
the reheating time is 35 min to 55 min and/or is fixedly set by means of a time relay.

13. The method (1) according to one of the previous claims 10-12 **characterized in that**
the compartments of the immersion basket are grid compartments and the immersion basket comprises between 2 and 10, preferably between 4 and 8 compartments and/or
the water tank (7) exhibits a width of 30 to 40 cm, a depth of 20 to 30 cm and a height of 45 to 60 cm.

14. The method (1) according to one of the previous claims 10-13 **characterized in that**
the device (1) comprises two heating elements (21), which are enclosed in cladding tubes preferably made of stainless steel and are present in the lower fifth of the water tank (7) above the bottom of the water tank (7) in a horizontally aligned manner, one or more storage rails being installed above the two heating elements (21) for receiving the immersion basket.

15. The method (1) according to one of the previous claims 10-14 **characterized in that**
the water tank (7) comprises an outlet opening (17) in the bottom and comprises an inlet opening (15) in an upper third, which are connected to one another via a water line (11) and the pump (9), the pump (9) being configured to draw the water out of the outlet opening (17) in the bottom of the water tank (7) and feed it into the inlet opening (15) in the upper third of the water tank (7) and/or
the water tank (7) has an outlet opening (17) in the bottom and the housing (5) has a discharge opening (13), which are connected to one another via a water line (11) and the pump (9) or can be connected in a valve position, the pump being configured to draw the water out of the outlet opening (17) in the bottom of the water tank (7) and to discharge the water via the discharge opening (13).

## Revendications

1. Procédé de conservation d'un composant de plat à préparer chaud comprenant les étapes suivantes
a. préparation chaude d'une quantité du composant de plat pour une pluralité de portions, dans lequel la préparation chaude comprend le réchauffage du composant de plat jusqu'au point de cuisson et se déroule dans un récipient de cuisson ouvert
b. conditionnement du composant de plat à préparer à chaud à une température d'au moins 75 °C dans une pluralité d'unités de conditionnement et scellage ultérieur des unités de conditionnement
c. refroidissement des unités de conditionnement d'une température à cœur d'au moins 65 °C à une température à cœur inférieure à 3 °C en 90 minutes ou moins
**caractérisé en ce que**
le conditionnement selon l'étape b) du procédé s'effectue à l'aide d'une machine de thermoformage, qui exécute les étapes suivantes
i. gaufrage d'unités de conditionnement en forme de barquette
ii. conditionnement des composants de plat dans les unités de conditionnement à une température d'au moins 75 °C
iii. rinçage à la vapeur des unités de conditionnement avec de la vapeur à une température de 100 °C ou plus,
iv. soudage des unités de conditionnement,
et dans lequel le refroidissement des unités de conditionnement à l'étape c) se déroule dans un bain-marie dont la température est de 3 °C ou moins.

2. Procédé selon la revendication précédente
**caractérisé en ce que**
au moins deux composants de plat ou plus, de préférence trois ou plus d'un menu de plat sont préparés, conditionnés et refroidis.

3. Procédé selon l'une des revendications précédentes
**caractérisé en ce que**
la préparation chaude se déroule dans un récipient de cuisson ouvert, qui est une casserole, une plaque de cuisson, une poêle ou un four.

4. Procédé selon l'une des revendications précédentes
**caractérisé en ce que**
la quantité d'un composant de plat à préparer présente un poids supérieur à 5 kg, de préférence supérieur à 10 kg, de manière particulièrement préférée supérieur à 20 kg, de sorte que la quantité convient de préférence à un nombre supérieur à 10, de préférence supérieur à 50, de manière particulièrement préférée supérieur à 100 portions.

5. Procédé selon l'une des revendications précédentes
**caractérisé en ce que**
les unités de conditionnement présentent une contenance comprise entre 200 mL et 10 litres, de préférence entre 1 litre et 5 litres, de manière particulièrement préférée entre 2 litres et 3 litres.

6. Procédé selon l'une des revendications précédentes
**caractérisé en ce que**
le bain-marie pour refroidir les unités de conditionnement est équipé d'un ou de plusieurs paniers d'immersion avec des compartiments pour les unités de conditionnement et un refroidisseur de flux est relié au bain-marie pour assurer une température de 3 °C ou moins pendant le refroidissement.

7. Procédé selon l'une des revendications précédentes
**caractérisé en ce que**
le conditionnement selon l'étape b) du procédé se déroule à l'aide d'une machine de thermoformage, qui exécute les étapes suivantes
i. gaufrage d'unités de conditionnement en forme de barquette à partir d'une feuille de transpondeur
ii. conditionnement des composants de plat dans les unités de conditionnement à une température d'au moins 75 °C
iii. rinçage à la vapeur des unités de conditionnement avec de la vapeur à une température de 120 °C, 130 °C ou plus
iv. soudage des unités de conditionnement à l'aide d'un film supérieur

8. Procédé de conservation d'un composant de plat à préparer chaud conditionné dans une pluralité d'unités de conditionnement et de stockage et de réchauffage des unités de conditionnement pour la consommation, comprenant les étapes suivantes
I. conservation d'un composant de plat à préparer chaud conditionné dans une pluralité d'unités de conditionnement au moyen d'un procédé selon l'une des revendications 1 à 7
II. stockage des unités de conditionnement à une température à cœur inférieure ou égale à 8 °C
III. réchauffement des unités de conditionnement, de préférence sur le lieu de consommation souhaité, d'une température à cœur inférieure à 8 °C à une température à cœur supérieure à 65 °C, de préférence à une température à cœur comprise entre 70 °C et 74 °C dans un bain-marie à une température comprise entre 80 °C et 90 °C.

9. Procédé selon la revendication 8
**caractérisé en ce que**
le réchauffage des unités de conditionnement se déroule dans un délai de 35 à 55 minutes.

10. Procédé selon la revendication 8 ou 9,
**caractérisé en ce qu'**un dispositif est utilisé pour le réchauffage des unités de conditionnement, comprenant
- un boîtier (5)
- un réservoir d'eau (7) pour contenir de l'eau et un couvercle (3) pour fermer le réservoir d'eau (7)
- un panier d'immersion avec des compartiments pour des unités de conditionnement d'aliments conservés réfrigérés à placer dans le réservoir d'eau (7)
- au moins un élément chauffant électrique (21) pour chauffer l'eau
- une pompe (9) pour faire circuler l'eau
- une unité de commande (19),
dans lequel l'unité de commande (19) est configurée pour réguler l'alimentation électrique de l'élément chauffant électrique (21) pendant un processus de réchauffage de sorte que la température de l'eau est maintenue à une température de réchauffage comprise entre 80° et 90 °C pendant un temps de réchauffage prédéterminé.

11. Procédé selon la revendication 10
**caractérisé en ce que**
la température de réchauffage pour le dispositif (1) est fixe et le dispositif (1) ne prévoit pas la possibilité d'un changement ou d'une sélection de la température de réchauffage par un utilisateur et/ou
le dispositif (1) pour le réglage fixe d'une température de réchauffage comprend un thermostat avec une température de réglage dans une plage allant de 80 °C à 90 °C, de manière davantage préférée 82 °C à 87 °C, de manière davantage préférée environ 85 °C.

12. Procédé selon l'une des revendications précédentes 10 ou 11 **caractérisé en ce que**
le dispositif comporte un capteur de température pour surveiller la température de l'eau et/ou
le temps de réchauffage est de 35 min à 55 min et/ou est fixé au moyen d'un relais temporisé.

13. Procédé selon l'une des revendications précédentes 10 à 12 **caractérisé en ce que**
les compartiments du panier d'immersion sont des compartiments à grille et le panier d'immersion comporte entre 2 et 10 compartiments, de préférence entre 4 et 8 et/ou le réservoir d'eau (7) présente une largeur de 30 à 40 cm, une profondeur de 20 à 30 cm et une hauteur de 45 à 60 cm.

14. Procédé selon l'une des revendications précédentes 10 à 13 **caractérisé en ce que**
le dispositif (1) comprend deux éléments chauffants (21), qui sont enfermés dans des tubes de protection, de préférence en acier inoxydable, et sont alignés horizontalement dans le cinquième inférieur du réservoir d'eau (7) au-dessus du fond du réservoir d'eau (7), dans lequel un ou plusieurs rails de stockage sont installés au-dessus des deux éléments chauffants (21) pour maintenir le panier d'immersion.

15. Procédé selon l'une des revendications précédentes 10 à 14 **caractérisé en ce que**
le réservoir d'eau (7) présente une ouverture de sortie (17) dans le fond et une ouverture d'entrée (15) dans un tiers supérieur, qui sont reliées l'une à l'autre par une conduite d'eau (11) et la pompe (9), la pompe (9) étant configurée de sorte que l'eau doit être aspirée hors de l'ouverture de sortie (17) dans le fond du réservoir d'eau (7) et introduite dans l'ouverture d'entrée (15) dans le tiers supérieur du réservoir d'eau (7) et/ou
le réservoir d'eau (7) présente une ouverture de sortie (17) dans le fond et le boîtier (5) présente une ouverture de vidange (13), qui sont reliées l'une à l'autre par une conduite d'eau (11) et la pompe (9) ou peuvent être connectées dans une position de vanne, dans lequel la pompe est configurée de façon à aspirer l'eau hors de l'ouverture de sortie (17) au fond du réservoir d'eau (7) et l'évacuer à travers l'ouverture de vidange (13).
